# EUROPÄISCHE PATENTSCHRIFT

(11) **EP 1 135 616 B1**
(45) Veröffentlichungstag und Bekanntmachung des Hinweises auf die Patenterteilung: **03.11.2004**
(21) Anmeldenummer: 99962220.2
(22) Anmeldetag: 06.12.1999
(51) Int. Cl.: F16B 7/04, E04B 2/76

(54) **T-VERBINDUNG ZWEIER PROFILSTÄBE**
T-LINK BETWEEN TWO PROFILE BARS
ASSEMBLAGE EN T DE DEUX BARREAUX PROFILES

(30) Priorität: 04.12.1998 DE 19855928
(43) Veröffentlichungstag der Anmeldung: 26.09.2001
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE)
(74) Vertreter: Draudt, Axel Hermann Christian, Dipl.-Ing.
(86) Internationale Anmeldenummer: PCT/EP1999/009512
(87) Internationale Veröffentlichungsnummer: WO 2000/034670

(56) Entgegenhaltungen:
- FR-A- 2 335 718
- GB-A- 1 557 693
- US-A- 4 583 359

## Beschreibung

Die Erfindung bezieht sich auf eine T-Verbindung zweier Profilstäbe, mit einem Verbinder, der zwei längliche, quer von einem Fixierelement verspannbare Klemmbacken aufweist, die in hinterschnittenen Mantelnuten eines zweiten Profilstabs zangenartig schließend verklemmbar sind und die in einen Hohlraum eines ersten Profilstabs stirnseitig eingreifen sowie an zwischen ihnen angeordneten rohrparallelen Innenstegen des ersten Profilstabs festklemmbar sind.

Eine T-Verbindung mit den vorgenannten Merkmalen ist aus der GB-A-1 557 693 bekannt. An den zweiten, polygonal ausgebildeten Profilstab wird der erste Profilstab in Gestalt eines rechteckigen Rohres angeschlossen, dessen Schmalwände mit den aufeinander zuweisenden Innenstegen versehen sind. Je eine Klemmbacke ist zwischen den beiden Innenstegen und der breiten Rohrwand angeordnet und ragt aus dem ersten Profilstab hervor, wobei das Fixierelement im Rohrinneren angeordnet ist und durch ein Loch des ersten Profilstabs bedient wird. Im Falle eines Verspannens der Klemmbacken durch das Fixierelement stützen sich die Klemmbacken nahe des Fixierelements an den Stegen ab und klemmen diese ein. Zugleich spreizen sich die Endkanten der Klemmbacken und greifen mit einer hakenförmigen Profilierung an den Innenwänden des ersten Profilstabs an, so daß sich die aus dem ersten Profilstab herausragenden Backenteile der Klemmbacken zangenartig in den hinterschnittenen Mantelnuten des zweiten Profilstabs verklemmen lassen. Damit sind die Klemmbacken jeweils an drei Stellen abgestützt nämlich beidseitig des Fixierelements und an ihren rohrinnenseitigen Kanten. Insbesondere die im ersten Profilstab gelegenen Klemmstellen sind jedoch kleinflächig, so daß die T-Verbindung entsprechend verbesserungswürdig erscheint. Auch ist sie auf eine Anwendung eines rechteckigen ersten Profilstabs beschränkt.

Der Erfindung liegt daher die Aufgabe zugrunde, eine T-Verbindung mit den eingangs genannten Merkmalen so zu verbessern, daß eine gesteigerte Verbindungsfestigkeit erreicht wird, insbesondere auch bei Profilstäben beliebigen Querschnitts.

Diese Aufgabe wird dadurch gelöst, daß der erste Profilstab mehr als zwei über seinen Innenumfang gleichmäßig verteilte und jeweils paarweise diametral gegenüberliegende Innenstege aufweist, deren Erstreckung durch den ersten Profilstab unvollständig ist, daß verspannte Klemmbacken ausschließlich Innenstege längs linienförmig und/oder flächenförmig anliegend festklemmen, und daß die Klemmbacken mit Längskanten jeweils in einen zwischen dem festgeklemmten und dessen benachbarten Innensteg gelegenen Zwischenraum eingreifen.

Für die Erfindung ist zunächst von Bedeutung, daß der erste Profilstab mehr als zwei über seinen Innenumfang gleichmäßig verteilte Innenstege aufweist. Solche vielzähligen Innenstege können bedarfsweise verteilt werden, insbesondere bei Profilstäben beliebiger Querschnitte. Bei solchen Anordnungen können die Klemmbacken dann an den Stellen positioniert werden, wo sie für die Verbindungsfestigkeit von hervorragender Bedeutung sind. Desweiteren ist von Bedeutung, daß verspannte Klemmbacken ausschließlich Innenstege festklemmen. Eine Anlage an Innenwänden des ersten Profilstabs ist nicht erforderlich. Der Innenumriß des ersten Profilstabs, und damit auch dessen Außenumriß sind für die Verbindungsfestigkeit der T-Verbindung ohne Bedeutung. Die erforderliche Verbindungsfestigkeit wird vielmehr dadurch erreicht, daß das Festklemmen längs linienförmig und/oder flächenförmig anliegend erfolgt. Es werden also lange beziehungsweise großflächige Klemmbereiche erzeugt, die einen ausreichenden Kraftschluß zwischen den Klemmbacken und den Innenstegen erzielen lassen. Die großen Auflageflächen der Bakken auf den Innenstegen verhindern Spitzenbelastungen, die die Innenstege oder den ersten Profilstab verformen könnten. Gleichzeitig ermöglichen die Innenstege, daß der Verbinder auf seiner gesamten Klemmlänge innerhalb des ersten Profilstabs verschoben und somit seine Position passend eingestellt werden kann. Desweiteren ist von Bedeutung, daß die Klemmbacken mit Längskanten jeweils in einen zwischen dem festgeklemmten und dessen benachbarten Innensteg gelegenen Zwischenraum eingreifen. Infolgedessen werden die Klemmbacken querschnittsmäßig so groß wie möglich ausgebildet. Ihre Längskanten können nahe der Innenwand des ersten Profilstabs angeordnet sein, so daß ein großer Backenquerschnitt ermöglicht wird. Auf die Innenstege einwirkende Klemmkräfte werden daher nicht durch Instabilitäten der Klemmbacken wegen ungenügender Querschnittsausbildung beeinträchtigt.

Eine vorteilhafte T-Verbindung wird so ausgestaltet, daß die Innenstege unter fünfundvierzig Winkelgrad über den Innenumfang des ersten Profilstabs verteilt sind. Damit ergeben sich drei unterschiedliche Möglichkeiten zur Anordnung der Klemmbacken im ersten Profilstab, so daß der zweite Profilstab in drei unterschiedlichen Winkelpositionen zum ersten Profilstab angeordnet sein kann. Das ist insbesondere von Bedeutung, wenn die Profilstäbe rechteckige oder unrunde Querschnitte aufweisen, die ausgenutzt werden sollen, um einer Konstruktion aus Profilstäben besondere Belastungs- und/oder Gestaltungseigenschaften zu verleihen. Um einen sicheren Halt des Verbinders in dem ersten Profilstab zu unterstützen, sind die Innenstege des ersten Profilstabs diametral gegenüberliegend und über den Umfang der Innenwand des ersten Profilstabs gleichmäßig verteilt angebracht. Auf diese Weise umfassen die Klemmbacken des ersten Verbinders jeweils zwei Innenstege und erhalten auf diese Weise einen guten Halt. Für den festen Sitz der Klemmbacken ist ein Spielraum dadurch gegeben, daß die Innenstege unproblematisch auch stärker als notwendig geklemmt und sogar etwas plastisch verformt werden können, ohne daß die Stabilität und Funktionstüchtigkeit des ersten Profilstabs oder des Verbinders beeinträchtigt wird. Dies ist insbesondere im Hinblick auf den nichtprofessionellen Verwender vorteilhaft, da nicht immer mit der richtigen Feststellkraft gearbeitet wird. Wenn die Innenstege über den Umfang der Innenwand des ersten Profilstabs gleichmäßig verteilt angebracht sind, kann der Verbinder in verschiedenen Stellungen des ersten Profilstabs angebracht werden und ermöglicht auf diese Weise eine größere Flexibilität und einen einfachen Zusammenbau.

Die T-Verbindung kann so ausgebildet sein, daß beide Profilstäbe mit Mantelnuten ausgebildet sind und die Innenstege jeweils mit einer der Mantelnuten fluchten. Diese Ausgestaltung ist insbesondere von Vorteil, wenn der erste Profilstab außen zumindest Umfangsabschnittsweise mit Mantelnuten versehen ist. Es ergibt sich zum einen eine verbesserte Biegesteifigkeit des ersten Profilstabs und desweiteren eine Versteifung der Innenwand des ersten Profilstabs insbesondere im Bereich einer Mantelnut.

Eine vorteilhafte Weiterbildung der T-Verbindung zeichnet sich dadurch aus, daß die Innenstege jeweils eine dicke Basis und einen davon ausgehend radial erstreckten, zwischen den Klemmbacken festklemmbaren dünneren Klemmstreifen aufweisen. Die dicke Basis wird im Sinne einer verbesserten Stabilität ausgebildet. Zum einen im Hinblick auf eine verbesserte Stabilität des ersten Profilstabs, zum anderen aber vor allem im Hinblick auf eine verbesserte Stabilität der Innenstege, sofern diese vergleichsweise weit in das Innere des ersten Profilstabs hineinragend ausgebildet sind. Die dünneren Klemmstreifen könnten dann zu Instabilitäten führen, falls die Klemmbacken aus konstruktiven Gründen nicht nahe genug an die Innenwände des Profilstabs heranreichen würden. Die Stabilität der dünnen Klemmstreifen würde dann nahe der Innenwand des ersten Profilstabs nicht ausreichen. Derartiges ist insbesondere zu bedenken, wenn in einem Konstruktionssystem erste Profilstäbe mit unterschiedlichen Querschnitten angewendet werden sollen, bei denen Klemmbacken derselben Größe eingesetzt werden sollen. Es ist dann erforderlich, breitere beziehungsweise radial weiter zum Inneren hin vorspringende Innenstege einzusetzen.

Im vorstehenden Sinne kann die T-Verbindung dahingehend verbessert werden, daß die Erstreckung der dicken Basis der Innenstege in radialer Richtung bei vorgegebener Breite der Klemmbacken von einer Entfernung zweier einander diagonal gegenüberliegender Klemmstreifen bestimmt ist. Derartige Ausgestaltungen kommen insbesondere zur Anwendung, wenn erste Profilstäbe zum Einsatz kommen, bei denen einander gegenüberliegende Innenstege ungleiche Breiten aufweisen, zum Beispiel weil die Querschnitte mit Innenstegen unsymmetrisch oder sonstwie speziell gestaltet werden.

Es kann vorteilhaft sein, die T-Verbindung so auszubilden, daß das Fixierelement des Verbinders in einer Montageendstellung der Profilstäbe durch einen Zwischenraum zwischen einem Ende des ersten und einer Mantelfläche des zweiten Profilstabs hindurch bedienbar ist. Die Bedienung des Fixierelements des Verbinders in einer Montageendstellung der Profilstäbe durch einen Zwischenraum zwischen einem Ende des ersten und einer Mantelfläche des zweiten Profilstabs hindurch ermöglicht es, eine große Vielfalt von Profilstäben mit verschiedenen Formen zu verbinden, die nicht aufeinander abgestimmt sein müssen. Weder im ersten noch im zweiten Profilstab müssen feste Positionen für Löcher oder Ablängungen vorgesehen sein, die die Herstellung der Abmessungen der Profilstäbe für einen nichtprofessionellen Anwender erschweren würden. Auf diese Weise erhält man eine sehr gut herzustellende und Längs- und Querbelastungen gut standhaltende Verbindung zwischen den Profilstäben. Der Verlust des Verbinders beziehungsweise das Hereinrutschen in den ersten Profilstab ist nahezu ausgeschlossen, weil das Fixierelement neben der Festklemmung gleichzeitig eine Kupplung beim Einbau und beim Verschieben darstellt.

Insbesondere bei der vorbeschriebenen Ausbildung ist es möglich, das Ende des ersten Profilstabs haltelochfrei oder betätigungslochfrei auszubilden. Es ist also weder ein Halteloch notwendig, in dem sich ein Teil des Verbinders abstützen muß, um nicht längs aus dem ersten Profilstab herausgezogen zu werden, noch wird ein Betätigungsloch erforderlich, um das Fixierelement zu bedienen. Derartige Ausgestaltungen ermöglichen es, daß Profilstäbe an beliebigen Stellen abgelängt werden können. Das bedeutet geringen technischen und zeitlichen Aufwand. Beispielsweise muß kein vorbestimmter Abstand des Verbinders zum ersten Profilstab eingehalten werden und auch die Profilstäbe können in einem aus der Längserstreckung des Fixierelements vorgegebenen Abstandsbereichs zueinander bedarfsweise positioniert und befestigt werden. Trotz einer klemmenden T-Verbindung können noch nachträglich Korrekturen vorgenommen werden. Die Relativpositionen der beiden Profilstäbe können geändert werden, ohne daß der Verbinder oder die Profilstäbe wieder auseinandergenommen werden müssen. Infolgedessen kann die T-Verbindung unproblematisch von einer einzigen Person angewendet werden, die darüber hinaus keine besonderen Fachkenntnisse zu haben braucht. Infolgedessen ist die T-Verbindung von Laien gut anwendbar und an jedermann gut zu verkaufen.

Um die Verliersicherheit zu verbessern und eine größere Steifigkeit bzw. eine kompaktere Bauform und eine höhere Stabilität zu erreichen, besteht der Verbinder höchstens aus zwei als Einzelteile ausgebildeten Klemmbacken, die von dem Fixierelement verstellbar gekuppelt sind. Die geringe Anzahl von Teilen ist mit wenigen Handgriffen zu dem Verbinder zusammenzusetzen und an den zweiten Profilstab anzubringen. Das Fixierelement hält die Klemmbacken beim Einbau zusammen und beaufschlagt sie im eingebauten Zustand mit einer Feststellkraft, die die beiden Einzelteile des Verbinders zusammen- bzw. auseinanderdrückt und damit an dem ersten und zweiten Profilstab festsetzt.

Wenn ein als Schraube ausgebildetes Fixierelement bezüglich der Längsrichtung des ersten Profilstabs geneigt ist und/oder das Ende des ersten Profilstabs mit Abstand vom zweiten Profilstab angeordnet ist, ist es ohne weiteres möglich, daß der Werkzeugeingriff zwischen den beiden Profilstäben erfolgt. Die in dem geneigten Einschraubkanal eingesetzte, geneigte Schraube kann sowohl an ihrem Kopfende als auch an ihrem Fußende an dem Verbinder betätigt werden, wobei insbesondere für die zweite Variante ausreichender Abstand zwischen den Profilstäben vorhanden sein muß.

Wenn die als Fixierelement dienende Schraube mit ihrem Kopf zum zweiten Profilstab hin geneigt ist, ist es auch bei einem sehr geringen Abstand zwischen den beiden Profilstäben, der zum Beispiel durch das Aufeinandertreffen eines geraden mit einem gekrümmten Profilstab entsteht, eine Bedienung des Fixierelements durch den Zwischenraum zwischen den Profilstäben möglich. Das Erreichen des Kopfes der Schraube ist lediglich von dem Durchmesser des Werkzeugs abhängig. Je nach Ausbildung des Schraubenkopfes ist eine weitere Verringerung des Abstandes zwischen den beiden Profilstäben möglich, indem man ein sehr schmales Werkzeug wählt. Die aufzuwendende Kraft ist selbst bei dicken Profilstäben auf Grund der direkten Umsetzung der Kraft nicht sehr groß.

Vorteilhaft ist es, wenn der Verbinder für das Fixierelement sowohl ein senkrecht als auch ein schräg zu den Klemmbacken verlaufendes Loch aufweist. Auf diese Weise ist eine Verwendung des Verbinders sowohl für gerade eingesetzte Schrauben als auch für schräg eingesetzte möglich. Dies macht ihn zu einem universell verwendbaren Verbindertyp, was die Herstellungskosten herabsetzt; für den Verwender ist es nicht nötig, verschiedene Verbinderarten zu erwerben, selbst wenn er unterschiedlichste Profilstäbe, insbesondere Hohlprofilstäbe, miteinander verbinden möchte.

Um zu ermöglichen, daß der Verbinder an denselben Mantelnuten des zweiten Profilstabs in verschiedenen Winkelstellungen relativ zur Längsachse des Profilstabs senkrecht festgesetzt werden kann, weist der Verbinder in den Klemmbacken Langlöcher für den Einsatz des Fixierelements auf und/oder sind die Zangenschenkel des Verbinders mit balligen Schenkelenden in den Hinterschneidungen der Mantelnuten in unterschiedlichen Winkeleinstellungen des Verbinders an dem zweiten Profilstab festklemmbar. Auf diese Weise lassen sich zu beiden Seiten der Normalstellung (α=0) winklige Einstellungen (Schrägwinkel +/-α) des ersten Profilstabs erreichen. Durch das Langloch in einer Klemmbacke ist es gewährleistet, daß dieselbe Festigkeit und Qualität der Verbindung wie bei einem senkrechten Einsatz gegeben ist.

Zur Erhöhung der Stabilität ist es vorteilhaft, daß die Klemmbacken in relative Quer- und/oder Parallelverschiebungen verhinderndem, gegenseitigem Formeingriff stehen. Der gegenseitige Formeingriff ermöglicht eine starke Erhöhung der Stabilität bei geringer Erhöhung des Material- und Herstellungsaufwands. Der Formeingriff wird einfach durch Zusammensetzen der Klemmbacken des Verbinders hergestellt und läßt sich auf dieselbe einfache Weise lösen, wenn der Verbinder verschoben oder für eine andere Verbindung eingesetzt werden soll.

Insbesondere für die winklige Anordnung des Verbinders relativ zum zweiten Profilstab ist es vorteilhaft, wenn an den Innenflächen der Klemmbacken ein sägezahnförmiger, gegenseitiger Formeingriff besteht und/oder daß sich längs erstreckende, in Längsnuten der anderen Klemmbacke eingreifende Rippen und/oder Nocken vorhanden sind. Auf diese Weise lassen sich verschiedene formschlüssige Verbindungsstellungen einrichten. Bei einem feinen Sägezahn oder dgl. kann eine nahezu die gesamten Schrägwinkel α überdeckende Winkeleinstellung des Verbinders sicher gewährleistet werden. Rippen und/oder Nocken der Klemmbacken können mehr oder weniger massiv ausgebildet werden und eignen sich infolgedessen insbesondere für massive Ausbildungen der Klemmbacken.

Es ist vorteilhaft, wenn der Verbinder derartige Abmessungen besitzt, daß auf derselben Höhe des zweiten Profilstabs nebeneinander mehrere Verbinder mit angeschlossenen ersten Profilstäben eingesetzt werden können. Dies wird vorteilhaft dadurch erreicht, daß ein Zangenschenkel einer Klemmbacke eines Verbinders maximal eine Hälfte eines Querschnitts einer Mantelnut des zweiten Profilstabs einnimmt, in deren andere Hälfte ein Zangenschenkel eines anderen Verbinders einbaubar ist.

Insbesondere wird dies dadurch erreicht, daß der Verbinder und das Ende des ersten Profilstabes nicht über die Mittelebenen zweier klemmbackenbesetzer Mantelnuten hinausragen, die beide durch die Längsachse des zweiten Profilstabs verlaufen. Wenn kein Teil des Verbinders über die genannten Mittelebenen hinausragt, ist es einfach möglich, einen zweiten Verbinder auf derselben Höhe eines zweiten Profilstabs einzusetzen. Es können verschiedenartig profilierte erste Profilstäbe mit den Verbindern an dem zweiten Profilstab befestigt werden. Bedingung ist lediglich, daß das vordere Ende des Profilstabs nicht über die genannten Mittelebenen des jeweiligen Verbinders beziehungsweise benachbarter Verbinder hinausragen.

Es ist zu bevorzugen, daß die Zangenschenkel formschlüssig an eine Hinterschneidung einer Mantelnut des zweiten Profilstabs angepaßt sind. Es erfolgt ein Eingreifen der Zangenschenkel in die Hinterschneidungen. Die Verbindung zwischen den Zangenschenkeln und dem zweiten Profilstab sind besser gegen zufälliges Lösen miteinander verbunden, nämlich verstärkt formschlüssig. Beim Zusammenziehen der Klemmbacken durch das Fixierelement wird sofort ein Formschluß der Zangenschenkel und der Hinterschneidung hergestellt. Das erleichtert ein nachträgliches Korrigieren der Positionen der Profilstäbe zueinander durch Verschieben im Bereich des Formschlusses, ohne daß dazu die Verbindung vollständig gelöst werden müßte.

Für die T-Verbindung ist es von Vorteil, wenn die Klemmbacken bei am zweiten Profilstab verklemmten Zangenschenkeln ein linien- und/oder flächenförmiges Festklemmen der Innenstege gestattenden Abstand voneinander aufweisen. Damit wird verhindert, daß die Klemmbacken in der Nähe des zweiten Profilstabs aneinander anliegen und damit das ordnungsgemäße Klemmen der Zangenschenkel am zweiten Profilstab und den Kraftschluß der Klemmbacken in den Innenstegen beeinträchtigt wird.

Besonders vorteilhaft ist es, wenn beide Profilstäbe sowohl Innenstege als auch Mantelnuten aufweisen. Auf diese Weise können in beiden Profilstäben Verbinder eingesetzt beziehungsweise außen angebracht werden. Dies ermöglicht eine große Vielfalt von Verbindungen wobei der Anwender nicht darauf achten muß, für welche Art von Verbindung der Profilstab gerade vorgesehen ist. Gleichzeitig kann der Profilstab ganz nach Bedarf abgelängt werden und erfüllt die Anforderungen an die Stabilität und für ein Einsetzen des Verbinders an beliebigen Stellen. Es vereinfacht darüber hinaus die Herstellung der Profilstäbe, wenn es nur eine Art davon gibt.

Das Fixierelement ist besonders bedienerfreundlich angeordnet und erreichbar, wenn der erste Profilstab in einem Abstand zu dem zweiten Profilstab angeordnet ist und dabei das Fixierelement radial frei läßt. Dadurch kann das Fixierelement leicht von verschiedenen Werkzeugen erreicht und bedient werden. Die Stabilität des Verbinders ist auf Grund seiner großen Auflagefläche an den Innenstegen oder dem Innenumfang des ersten Profilstabs auch in diesem Fall unproblematisch.

Der Eingriff des Werkzeugs in das Fixierelement ist erleichtert, wenn der das Fixierelement freilassende Zwischenraum zwischen einem abgelängten Ende des ersten und einem polygonen oder gekrümmten Mantel des zweiten Profilstabs gebildet ist. Wenn das Ende des ersten Profilstabs und ein derartig geformter Mantel des zweiten Profilstabs in der Montageendstellung aneinanderstoßen, wird der Verbindung ein sicherer Halt durch eine zusätzliche Abstützung vermittelt. Weiterhin kann das Fixierelement vom Werkzeug durch den Zwischenraum, der aufgrund der Abschrägung der Mantelfläche des zweiten Profilstabs im Fall einer polygonalen oder gekrümmten Form gebildet ist, leicht erreicht werden. Die durch die polygonale oder runde Form gegebenen Abschrägung kann an die Winkelstellung des eingreifenden Werkzeugs angepaßt ausgebildet werden, so daß eine Führung des Werkzeugs geliefert wird.

Zum Schutz der Ankuppelstelle ist es vorteilhaft, daß eine zwischen dem ersten und dem zweiten Profilstab angeordnete Abdeckkappe den Verbinder und die Stirnseite des ersten Profilstabes abdeckt. Durch diese Maßnahme wird verhindert, daß in vom Verbinder freigelassenen Stellen des ersten Profilstabes Schmutz oder Feuchtigkeit eindringt beziehungsweise daß beim Vorbeistreifen etwas an den Spitzen oder Kanten des Verbinders hängenbleibt. Ein anderer Zweck dieser Abdeckkappe ist es, eine optisch vorteilhafte Ausbildung des Übergangs des ersten in den zweiten Profilstab herzustellen.

Um den Verbinder leicht auszubilden und preiswert herstellbar zu machen, ist der Verbinder aus einem ihn versteifend geformten Blech mit jeweils zwei einen Zangenschenkel aufweisenden Klemmbacken einstückig aufgebaut. Der Aufbau aus Blech verringert das Gewicht des Verbinders und liefert durch den einstückigen Aufbau dennoch einen zuverlässigen Sitz. Darüber hinaus läßt sich das Blech einfach formen, was insbesondere bei den Zangenschenkeln wichtig ist, damit ein exakter Formschluß und sicherer Halt an den äußeren Mantelnuten gegeben ist und Winkelverstellungen präzise vorgenomen werden können.

Eine vorteilhafte, stabile Ausbildung des Verbinders ist dann gegeben, wenn die Klemmbacken massiv ausgebildet sind. Die massive Ausbildung gewährleistet, daß sich der Verbinder auch bei einem kräftigen Zusammenspannen nicht verformt. Darüber hinaus ist es hierbei besonders einfach, Anformungen anzubringen, die relativ Parallelverschiebungen dadurch verhindern, daß sie in gegenseitigen Formeingriffen stehen.

Eine weitere wesentliche Verbesserung der T-Verbindung wird dadurch erreicht, daß die länglichen Klemmbacken von Ende zu Ende gegensinnig gewölbt sind. Infolge ihrer Wölbung haben die Klemmbacken im Bereich des Fixierelements Abstand voneinander. Eine Betätigung des Fixierelements führt dazu, daß dieser Abstand beseitigt wird und die Klemmbacken insbesondere im Bereich der Innenstege kraftschlüssig aufliegen, nämlich in Längsrichtung der Klemmstege linienförmig und/oder flächenförmig. Eine punktförmige oder kurze Auflage der Klemmbacken auf den Innenstegen kann dadurch ausgeschlossen werden. Das gilt insbesondere, wenn das Fixierelement mit vorbestimmter Kraft auf die beiden Klemmbacken einwirkt, die einerseits mit Zangenschenkeln am zweiten Profilstab festgeklemmt sind und andererseits die Innenstege des ersten Profilstabs festklemmen. Eine solche auf die Klemmbacken einwirkende Kraft wird bei Einsatz einer Schraube als Fixierelement dadurch vorbestimmt, daß die Schraube bis zu einem festgelegten Anzugsmoment angezogen wird.

Eine Weiterbildung der T-Verbindung kann vorsehen, daß die Klemmbacken an ihren Enden mit Längsnuten versehen sind, die bei verspannten Klemmbacken Umfangsabschnitte einer Bohrung und/oder einer Gewindebohrung sind. Die Bohrung beziehungsweise die Gewindebohrung kann dazu benutzt werden, Einbauten oder Befestigungen im Bereich der T-Verbindung vorzunehmen. Sie ermöglichen es darüber hinaus, den Verbinder auch dann einzusetzen, wenn er nicht bestimmungsgemäß zur Verbindung zweier Profilstäbe aneinander eingesetzt wird.

Die Anwendung des Verbinders wird erleichtert, wenn die Klemmbacken von Federbügeln paarweise zusammengeklammert sind. Das ist insbesondere der Fall, wenn die beiden Klemmbacken noch nicht durch ein Fixierelement unverlierbar miteinander verbunden sind, oder wenn ein bereits vorhandenes Fixierelement die Unverlierbarkeit der Klemmbacken des Verbinders nicht beziehungsweise noch nicht gewährleistet.

Eine weitere vorteilhafte Ausgestaltung der T-Verbindung zeichnet sich dadurch aus, daß die Klemmbacken beidseitig mit an den Innenstegen zentrierenden Schrägflächen versehen sind. Mit den Schrägflächen wird eine automatische Positionierung der Klemmbacken an den Innenstegen erreicht, insbesondere beim Fixieren der Klemmbacken. Es kann ausgeschlossen werden, daß die Klemmbacken zu weit auf einem Innensteg sitzen und den anderen Innensteg nicht ausreichend erfassen.

Durch eine einsteckseitig kugelschichtförmige Ausbildung der Klemmbacken des Verbinders ist es möglich, den ersten Profilstab in nahezu beliebigen Winkelstellungen zwischen 0 und 45°, gemessen zwischen einer Senkrechten zu der Längsache des zweiten Profilstabs und der Längsachse des ersten Profilstabs - nur beschränkt durch das Ende des ersten Profilstabs beziehungsweise den Zangenenden des Verbinders - einzustellen. Die Festsetzung erfolgt dann wie oben bereits beschrieben durch Zusammenziehen beziehungsweise Auseinanderdrücken der Klemmbacken im ersten Profilstab.

Eine besonders leichte und vielseitig einzusetzende Konstruktion ergibt sich, wenn beide Profilstäbe Hohlprofile sind. Die Profilstäbe können auf ihrer gesamten Länge mit Innenstegen und Mantelnuten versehen werden. Dies ermöglicht es, daß beliebig abgelängte Profilstäbe immer einen sicheren Halt für den daran angesetzten Verbinder gewährleisten, weil die Stege und Nuten durchgehend vorhanden sind. Eine Konstruktionseinheit ist dann ein Stab in der gewünschten Gesamtlänge, der in kleinere Stäbe aufgeteilt werden kann und die gewünschte Anzahl gleich ausgebildeter Verbinder.

Der erste Profilstab ist auch bei hohen Querbelastungen sicher an dem zweiten Profilstab gehalten, wenn die Backen am zweiten Profilstab eine Mantelnut freilassend verklemmt sind. Diese Art der Anlage liefert eine ausreichend breite Basisfläche für eine "wackelfreie" Abstützung des Verbinders. Bei einem runden zweiten Profilstabmantel besitzen die durch die zangenartigen Enden des Verbinders auf die Mantelfläche ausgeübten Kräfte eine Richtung, die nahezu einer Tangenten zur Mantelfläche entspricht. Die bei der vorgeschlagenen Anordnung des Verbinders auftretenden Kräfte verformen den zweiten Profilstab somit nicht, sondern wirken lediglich parallel zu seiner Mantelfläche. Auf diese Weise können wesentlich stärkere Kräfte abgefangen werden als bei einem Überwiegen der Kraftkomponenten senkrecht zur Mantelfläche. Durch die vorgeschlagene Art der Befestigung wird also gleichzeitig ein sicherer wie auch ein die Profilstäbe minimal belastender Halt des Verbinders gewährleistet.

Die T-Verbindung kann so ausgebildet werden, daß Profilstäbe bedarfsweise unterschiedlichen Querschnitts Mantelnuten gleicher Teilung aufweisen, und/oder daß die Innenstege beider Profilstäbe in derselben Zuordnung zueinander und/oder mit der Teilung der Mantelnuten angeordnet sind. Mantelnuten gleicher Teilung an beiden Profilstäben ergeben insbesondere ein ansprechendes Äußeres der Gesamtkonstruktion und verbessern darüber hinaus die Ausführbarkeit unterschiedlicher Konstruktionen. Wenn die Innenstege beider Profilstäbe in derselben Zuordnung zueinander angewendet sind, unterstützt das die gewünschte einheitliche Erscheinungsform der Konstruktion. Entsprechendes kann auch dadurch erreicht beziehungsweise unterstützt werden, daß die Innenstege beider Profilstäbe in derselben Zuordnung mit der Teilung der Mantelnuten angeordnet sind.

Konstruktionen aus Profilstäben können die Anforderungen stellen, daß Profilstäbe in unterschiedlichen Ebenen unterschiedliche Widerstandsmomente beziehungsweise -belastungen aufweisen müssen. Das ist beispielsweise bei Profilstäben mit länglichen Querschnitten der Fall. Im Hinblick hierauf kann die T-Verbindung dahingehend verbessert werden, daß Profilstäbe länglichen Querschnitts mindestens eine unterteilende Querwand aufweisen, die mit Innenstegen besetzt ist, deren Abstand von fluchtenden Innenstegen der Profilstäbe und/oder weiterer Querwände auf die Breite der Klemmbacken abgestimmt ist. Die Innenstege der Querwand können ebenfalls dazu genutzt werden, den zugehörigen Profilstab mit einem anderen durch Verklemmen zu verbinden. Die dabei eingesetzten Verbinder beziehungsweise ihre Klemmbacken benutzen dabei in beschriebener Weise einander gegenüber liegende Innenstege einer Querwand oder einer Innenwand eines Profilstabs oder einer weiteren Querwand.

Eine besonders biegesteife Ausbildung eines Profilstabs wird in einer T-Verbindung dahingehend ausgestaltet, daß zwischen zwei Querwänden eines Profilstabs länglichen Querschnitts Platz für die Anordnung eines Verbinders ist, dessen Klemmbacken an Innenstegen zweier die Querwände miteinander verbindender Wandabschnitte des Profilstabs festklemmbar sind. Damit wird eine mittige Anordnung eines Verbinders ermöglicht.

Die Erfindung wird anhand von in der Zeichnungen dargestellten Ausführungsbeispielen erläutert. Es zeigen:
- Fig.1: einen Längsschnitt durch eine Verbindung,
- Fig.2: einen Querschnitt durch einen ersten Profilstab,
- Fig.3: einen Längsschnitt mit einem Verbinder mit schräggestellter Schraube,
- Fig.4: einen Werkzeugeingriff an einem Verbinder,
- Fig.5a: einen Längsschnitt durch einen ersten Verbinder und einen zweiten, benachbart angeordneten Verbinder,
- Fig.6: eine Verbindung mit Abdeckkappe,
- Fig.7: eine Seitenansicht einer Verbindung mit kugeligem Verbinderende,
- Fig.8: einen um einen Winkel α gekippten Verbinder,
- Fig.9: eine Längsschnitt durch einen Verbinder aus Blech,
- Fig.10: eine perspektivische Ansicht zweier vertikal zusammenzusteckender Klemmbacken,
- Fig.11: eine Schnittdarstellung zweier noch nicht festgeklemmter Klemmbacken in Einbaustellung,
- Fig.12: eine der Fig.11 entsprechende Schnittdarstellung mit in Klemmstellung befindlichen Klemmbacken,
- Fig.13: eine Stirnansicht eines ersten Profilstabs mit eingesetzten Klemmbacken,
- Fig.14: eine Stirnansicht eines quadratischen Profilstabs,
- Fig.15: eine Stirneinsicht eines rechteckigen Profilstabs, und
- Fig.16: eine Stirnansicht eines speziellen Profilstabs.

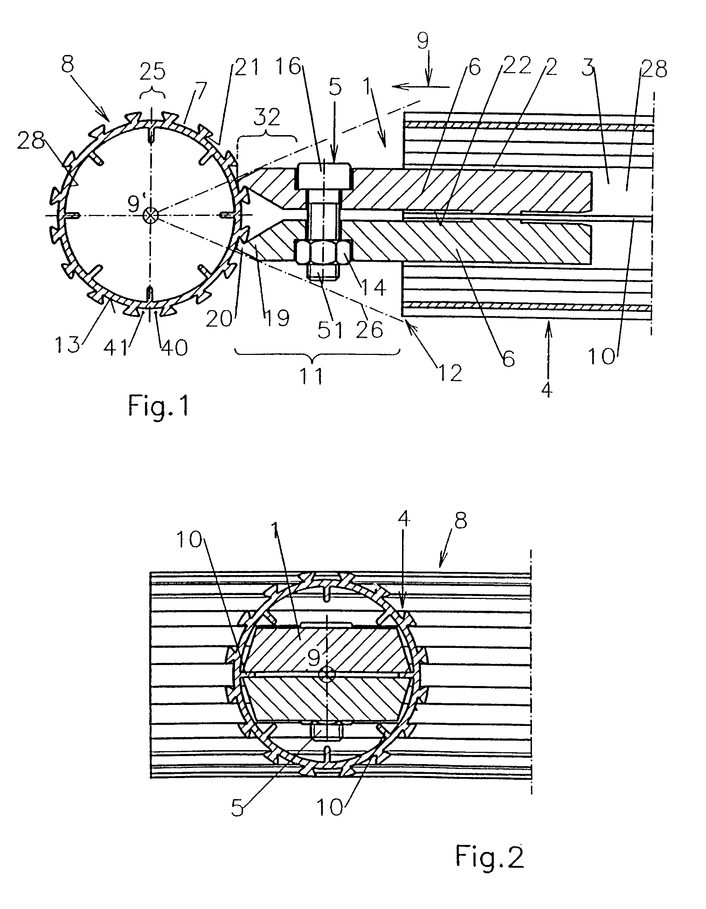

Fig.1 zeigt eine Verbindung aus einem ersten Profilstab 4, einem zweiten Profilstab 8 und einem Verbinder 1, der mit einem Einsteckende 2 in einen Hohlraum 3 des ersten Profilstabs 4 eingreift und dort gegen Herausziehen befestigt ist. Der Verbinder weist zwei radial zum ersten Profilstab 4 verstellbare, von einem Fixierelement 5 beaufschlagbare Backen 6 auf. Die dargestellten Klemmbacken 6 sind massiv ausgebildet. Mit balligen Schenkelenden 20 von Zangenschenkeln 19 der Klemmbacken 6 ist der Verbinder 1 an hinterschnittenen Mantelnuten 7 des zweiten Profilstabs 8 zangenartig schließend verklemmt. Das Fixierelement 5 preßt die Backen 6 sowohl an den hinterschnittenen Mantelnuten 7 des zweiten Profilstabs 8 wie auch an Innenstegen 10 des ersten Profilstabs fest. Das Fixierelement 5 ist als Schraube mit Schraubkopf 16 und aufgeschraubter Mutter 14 dargestellt. Der Schraubkopf 16 und die Mutter 14 sind in zwei gegenüberliegenden Klemmbacken 6 versenkt. Durch das Fixierelement 5 werden die Backen 6 des Verbinders 1 gegen Herausziehen aus dem ersten Profilstab 4 festgesetzt. Sie sind lediglich durch einen Kraft- beziehungsweise Reibschluß am ersten Profilstab 4 gehalten. Eine Durchführung bzw. Öffnung im ersten Profilstab 4 zwecks Verankerung des Fixierelements 5 beziehungsweise des Verbinders 1 ist für einen sicheren Halt nicht notwendig. Der erste Profilstab 4 ist also haltelochfrei ausgebildet.

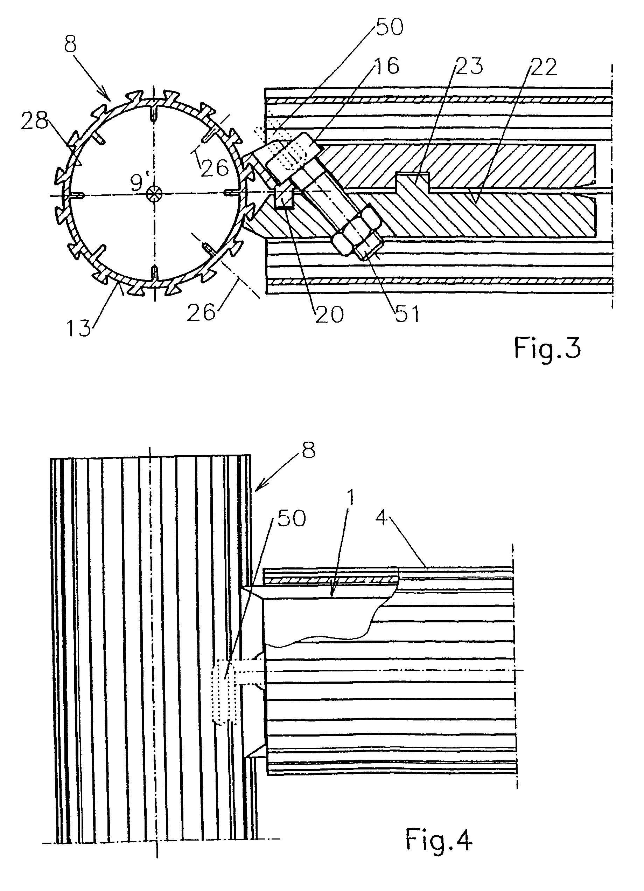

Die innerhalb des ersten Profilstabs 4 angeordneten Innenstege 10 liegen parallel zu seiner Längsachse 9. Auf diese Weise kann die Klemmung des Einsteckendes 2 des Verbinders 1 in dem Hohlraum 3 des ersten Profilstabs 4 entlang der Längsachse 9 an beliebigen Längspositionen stattfinden, solange die Innenstege 10 zwischen den Backen 6 festgeklemmt sind. Dies ermöglicht eine große Flexibilität in der Anordnung des Verbinders 1, bespielsweise bei eventuell nötigen Korrekturen des Sitzes des ersten Profilstabs 4 oder des zweiten Profilstabs 8. In der Montageendstellung, die in der Fig.1 dargestellt ist, befindet sich ein Zwischenraum 11 zwischen dem Ende 12 des ersten Profilstabs 4 und einer Mantelfläche 13 des zweiten Profilstabs 8. Dadurch ist das Fixierelement 5 des Verbinders 1 freigelassen. Es kann mit einem Werkzeug 50, welches zum Beispiel in Fig.3 und 4 dargestellt ist, einfach bedient werden.

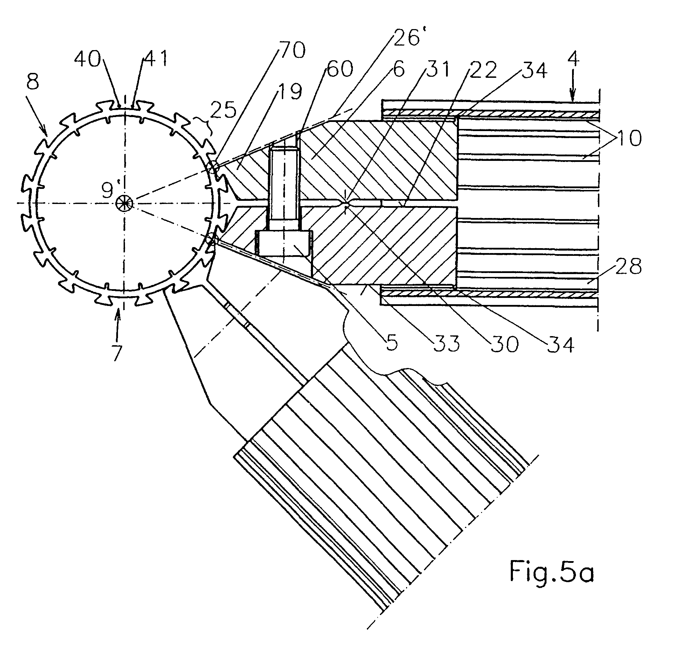

Der Verbinder 1 ist aus zwei als Einzelteile ausgebildeten Backen 6 aufgebaut. Das Fixierelement 5 dient sowohl zur Aufwendung der Feststellkraft, als auch um eine Kupplung zwischen den Klemmbacken 6 sowohl im eingesetzten Zustand wie auch beim Montagevorgang zu liefern. Das als Schraube ausgebildete Fixierelement 5 kann sowohl in eine Mutter 14 als auch in eine Klemmbacke 6 eingebrachtes Gewinde 60, wie in Fig. 5a dargestellt, eingeschraubt werden. Eine Verkleinerung des Zwischenraums 11 ist möglich, wenn das Fixierelement 5 bezüglich der Längsrichtung 9 des ersten Profilstabs 4 geneigt ist. Dies ist im Beispiel der Fig.3 dargestellt, in dem der Kopf 16 der Schraube näher am zweiten Profilstab 8 liegt, als der Fuß 51.

Fig.2 zeigt eine Verbindung eines ersten Profilstabs 4 mit einem zweiten Profilstab 8 durch einen Verbinder 1 mit Querschnitt durch den ersten Profilstab 4 und den Verbinder 1. Die Backen 6 des Verbinders 1 sind plattenförmig ausgebildet und sitzen zwischen den jeweils diametral paarig angeordneten Innenstegen 10 des ersten Profilstabs 4. Die Innenstege 10 sind jeweils in einem Winkelabstand von 45° zueinander relativ zum Mittelpunkt bzw. der Längsachse 9 des Profilstabs 4 angeordnet. Auf diese weise ist es möglich, den Verbinder 1 in verschiedenen Winkelstellungen innerhalb des ersten Profilstabs anzuordnen. Das Fixierelement 5 hält die Klemmbacken 6 des Verbinders 1 derartig zusammen, daß sie jeweils zwei Innenstege 10 an ihren äußeren Kanten zwischen sich einklemmen.

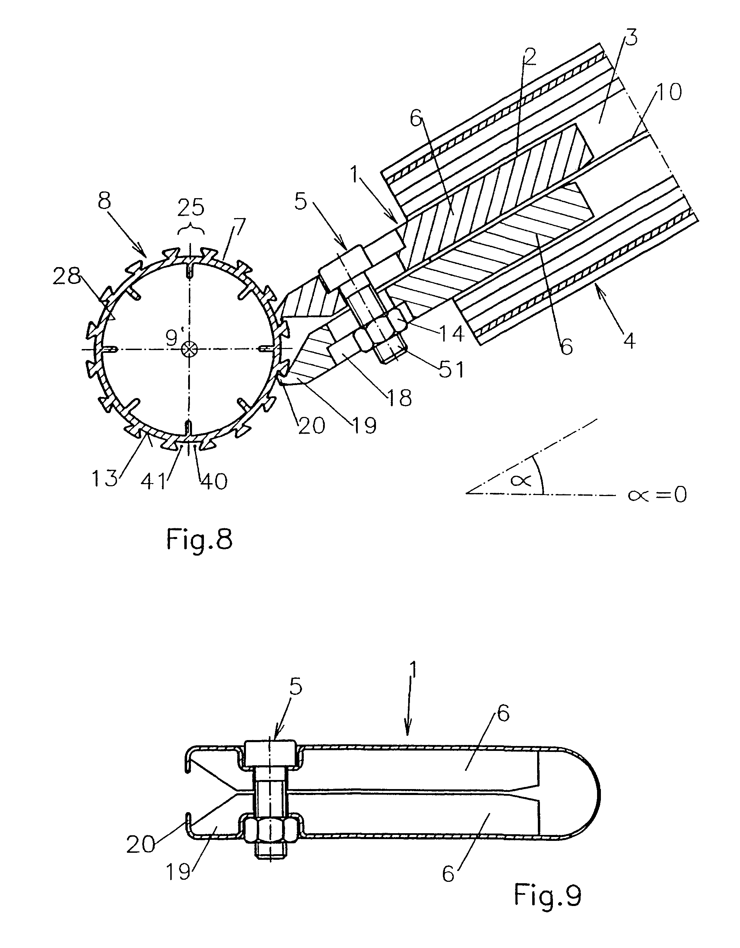

Fig.3 zeigt einen Schnitt durch eine Verbindung mit einem schräggestellten Fixierelement 5. Die Klemmbacken 6 sind durch gegenseitige Formeingriffe 23 vor gegenseitigen Parallelverschiebungen geschützt. Die Formeingriffe 23 liegen an der Innenfläche 22 der Klemmbacken 6. Diese Formeingriffe 23 können in einer beliebigen Anzahl angebracht werden. Speziell die Anbringung eines gegenseitigen Formeingriffs mit schräggestellten, aneinander angrenzenden Zähnen ermöglicht es, auch bei relativ zum Profilstab 8 winklig angeordnetem verbinder 1 einen sicheren Formeingriff zu gewährleisten, siehe Fig.8. Ein schräggestelltes Fixierelement 5 ermöglicht es dann, daß selbst bei einem sehr geringen Abstand 11 zwischen den Profilstäben 4 und 8 ein Werkzeug 50 eingeführt werden kann, wie in Fig.4 dargestellt wurde.

Fig. 5a zeigt zwei nebeneinander in derselben Höhe des zweiten Profilstabs 8 angebrachte Verbinder, die nicht unter den Schutzumfang fallen. Der Verbinder 1 weist an einer Klemmbacke 6 eine Anformung 30 an der Innenfläche 22 auf, die sich an der Anformung 31 der anderen Klemmbacke 6 abstützt. Wenn das Fixierelement 5, das in Fig.5a wiederum als Schraube ausgebildet ist, angezogen wird, werden die Zangenschenkel 19 der Klemmbacken 6 zusammengedrückt und greifen so in die Hinterschnitte der Mantelnuten 7 des zweiten Profilstabs 8 an. Durch die Anformungen 30,31 wird die Kraft des Fixierelements 5 umgelenkt und drückt die Klemmbacken 6 am Einsteckende 2 des Verbinders 1 radial auseinander. Hierdurch ergibt sich ein Kraftschluß des Außenumfangs 33 der Klemmbacken 6 mit der Innenwand 28 beziehungsweise den Innenstegen 10 des ersten Profilstabs 4. Die Klemmbacken 6 sind in diesem Fall in ihrem Einsteckende 2 nicht mehr als Platten ausgebildet, sondern halbrund. Der Außenumfang 33 entspricht deshalb nahezu dem Innenumfang 28 des ersten Profilstabs 4, wenn er als rundes Hohlprofil ausgebildet ist. Eine Verbesserung des Halts innerhalb des ersten Profilstabs 4 ist durch einen am Einsteckende herumlaufenden spitzen Bund 34 des Verbinders 1 gegeben.

Um mehrere gleiche Verbinder 1 mit angeschlossenem ersten Profilstab 4 an einem zweiten Profilstab 8 anzubringen, ist es für eine möglichst dichte Packung notwendig, daß ein Zangenschenkel 19 einer Klemmbacke 6 eines Verbinders 1 mit seinem Schenkelende 20 maximal eine Hälfte 40 des Querschnitts 25 einer Mantelnut 7 des zweiten Profilstabs 8 einnimmt. In die andere Hälfte 41 ist dann ein Zangenschenkel 19 eines anderen Verbinders 1 einbaubar. Dies ist insbesondere dann möglich, wenn der Verbinder 1 und das Ende 12 des ersten Profilstabs 4 nicht über die Mittelebenen 26 zweier klemmbakkenbesetzter Mantelnuten 7 hinausragen. Die Mittelebenen 26 sind durch die Längsachse 9' des zweiten Profilstabs 8 und jeweils eine parallel zur Längsachse 9' und durch die Mitte der Mantelnut 7 verlaufenden Gerade 70 gegeben. Auf diese Weise ist eine enge Packung von vor Kopf angeordneten Profilstäben 4 zu erreichen, ohne daß sie sich gegenseitig behindern.

Die Außenwand 33 der Klemmbacken 6 ist halbrund, angepaßt an die Form der Innenwand 28 des ersten Profilstabs 4 ausgebildet. Die Außenwände 33 werden bei angezogenem Fixierelement 5 gegen die Innenstege 10 des ersten Profilstabs 4 gedrückt. Durch die kleine Auflagefläche an den Innenstegen 10 entsteht ein hoher Anpreßdruck und damit eine gute Verklemmung.

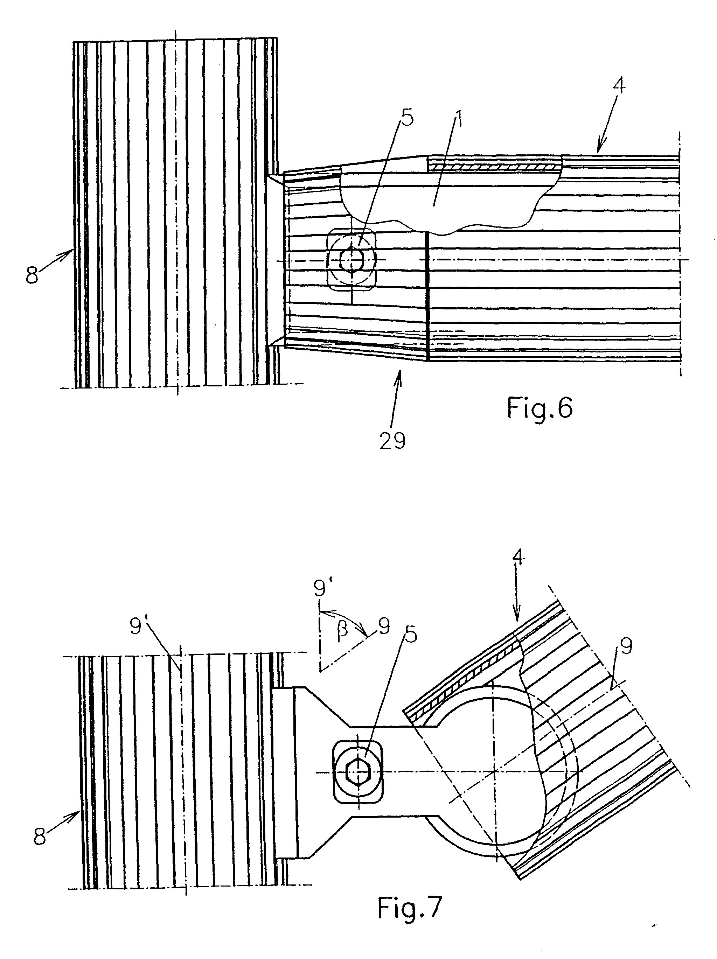

Fig.6 zeigt eine Seitenansicht einer Verbindung mit einem Verbinder 1 und einem Fixierelement 5. Über dem Verbinder 1 und zwischen dem zweiten Profilstab 8 und dem ersten Profilstab 4 ist eine Abdeckkappe 29 angeordnet. Diese kann aus Kunststoff hergestellt sein und soll verhindern, daß Schmutz in den ersten Profilstab 4 eindringt beziehungsweise das Fixierelement 5 des Verbinders 1, beispielsweise bei widrigen Umgebungsbedingungen, unlösbar wird. Darüberhinaus liefert die Abdeckkappe 29 einen angenehmeren optischen Eindruck. Mit einem ähnlichen Material werden dann die Profilstäbe 4, 8 verkleidet, und auf diese Weise dient die hier dargestellte Verbindung lediglich als Gerüst und kann in vielfältigen Variationen ausgebaut werden.

Fig.7 zeigt ein kugelschichtförmiges Einsteckende 2 des Verbinders 1, das im Querschnitt der Darstellung in Fig.2 entspricht. Durch die kugelschichtförmige Ausbildung des Einsteckendes 2 ist es möglich, den ersten Profilstab 4 innerhalb der Darstellungsebene in verschiedenen Winkelstellungen relativ zum zweiten Profilstab 8 anzuordnen. Dabei ist es Bedingung, daß die Klemmbakken an den Innenstegen 10 des Profilstabs 4 festklemmen können. Auf diese Weise sind Kippungen um den Winkel β zwischen den beiden Achsen 9 und 9' der Profilstäbe 4, 8 möglich. Zusammen mit den Kippungen α in einer Ebene senkrecht zur Längsachse 9' des zweiten Profilstabs 8, die in Fig. 8 dargestellt sind, ist auf diese Weise der gesamte Winkelraum für Verkippungen des ersten Profilstabs 4 zu erreichen. Gleichzeitig ist immer ein sicherer Halt durch den Verbinder 1 gegeben. Dargestellt sind in diesen gesamten Abbildungen runde Hohlprofile. Ebenso ist es aber auch denkbar, Profilstäbe einzusetzen, die nur an einer Stelle eines beliebigen Querschnitts einen Hohlraum 3 aufweisen, in den dann der Verbinder 1 eingesetzt wird.

Fig.8 zeigt einen Verbinder 1, der innerhalb einer Ebene senkrecht zu der Längsachse 9' des zweiten Hohlprofilstabs 8 um den Winkel α gekippt ist. Die Klemmbacken 6 weisen Langlöcher 18 für den Einsatz des Fixierelements 5 auf. Dadurch kann eine relative Parellelverschiebung der Klemmbacken 6 zueinander erfolgen, wobei gleichzeitig immer eine Klemmung der Innenstege 10 des ersten Profilstabes erfolgt. Dies resultiert in einer Winkeländerung α des Verbinders 1 relativ zur Normalstellung mit α=0.

Die Schenkelenden 20 der Zangenschenkel 19 sind in besonderer Weise ballig ausgebildet, damit sie sowohl in der Stellung der in Fig.8 oberen Backe angewendet werden können, wie auch in der Stellung der unteren Backe, ohne sich selbst oder den Nutenbereich zu verformen, wenn sie um einen Winkel α geschwenkt werden.

Fig.9 zeigt einen Verbinder 1, der aus Blech gewalzt ist. Er ist einstückig aufgebaut, da die Klemmbacken 6 am Einsteckende 2 elastisch verbunden sind. Der Verbinder 1 weist wiederum die wesentlichen Komponenten Klemmbacken 6, Fixierelement 5, Zangenschenkel 19 und Schenkelenden 20 auf. Vorteilhaft ist es, daß die Ausbildung der Formgebung der Schenkelenden 20, die als Balligkeit für eine Winkelverstellung um einen Schrägwinkel α wesentlich ist, einfacher herzustellen ist.

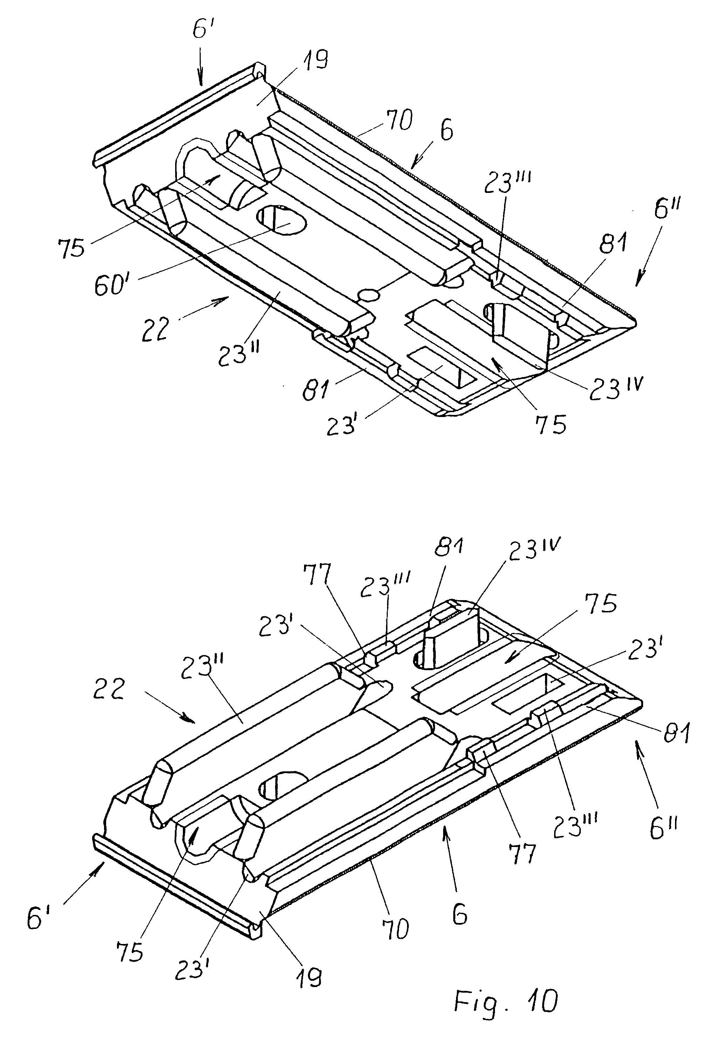

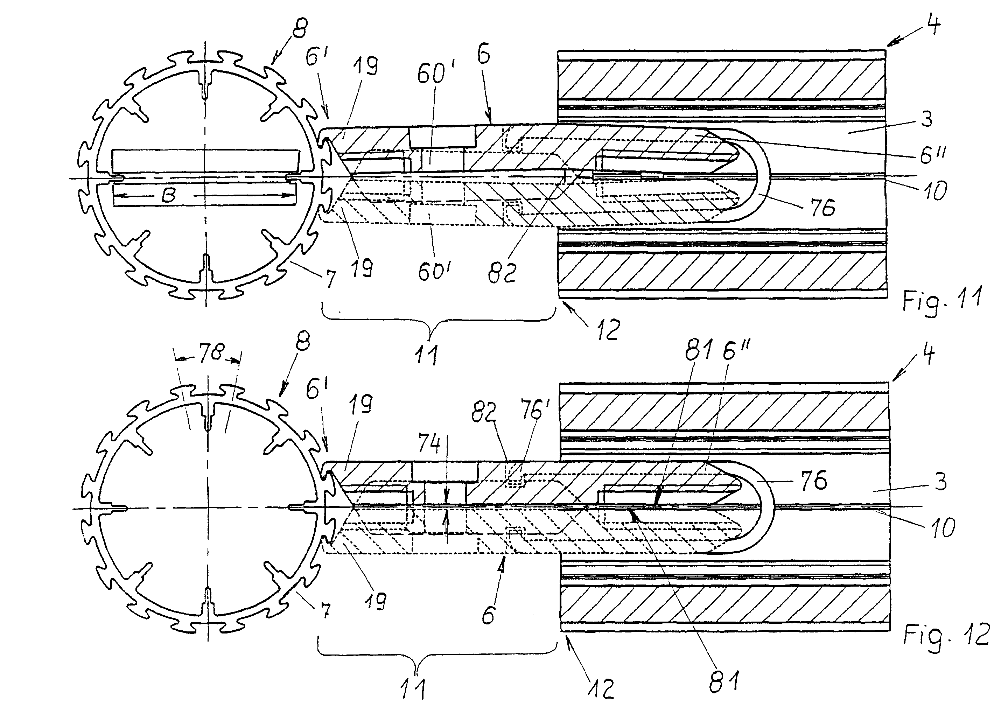

Fig.10 zeigt zwei Klemmbacken 6 eines Verbinders, die untere in perspektivischer Aufsicht, die obere in perspektivischer Untersicht. Die Zangenschenkel 19 sind an den linken Enden 6' angeordnet und werden gemäß Fig.11, 12 in die Mantelnuten 7 eingesetzt, eine Mantelnut übergreifend. An den anderen Enden 6" befinden sich Klemmflächen 81. Sie befinden sich so weit wie möglich außen unterhalb von Längskanten 70 der Backen 6. Mit den Klemmflächen 81 liegen die Backen in Längsrichtung der Profilstäbe 4 linien- beziehungsweise flächenförmig auf den Innenstegen 10 der Profilstäbe auf.

Der Verbinder 1 beziehungsweise seine Klemmbacken 6 müssen aus der Konstruktion herrührende Belastung zwischen den Profilstäben 4 und 8 übertragen. Einer relativen Lagesicherung beider Klemmbacken 6 aneinander dienen Längsnuten 23', Rippen 23" und Nocken 23^{IV}. Zangenschenkelseitig sind an jeder Klemmbacke 6 zwei längskantenparallele Rippen 23" angeordnet und direkt neben ihnen Längsnuten 23'. Die Anordnung ist so getroffen, daß eine Rippe 23" einer Klemmbacke 6 in eine Nute 23' der anderen Klemmbacke 6 eingreift. Die insgesamt vier Rippen 23" und Längsnuten 23' gewährleisten quer zu den Klemmbacken 6 in deren Teilungsebene einen hervorragenden formschlüssigen Eingriff und stabilisieren die Klemmbacken 6 gegen Durchbiegungen, die hier von dem nicht dargestellten Fixierelement verursacht werden könnten, die in Durchgangslöchern 60' wirken. Dem Zusammenbau der Klemmplatten 6 dienen die weiteren Nocken 23^{IV}, die vergleichsweise lang ausgebildet sind, so daß sie in tiefe Längsnuten 23' der jeweils anderen Klemmbacke 6 führend eingebaut werden könnten und so das Zusammenstecken der Klemmbacken 6 erleichtern. Außerdem sind in der Nähe der Klemmflächen 81 Nocken 23 "' vorhanden, wobei die Nocken 23 ' ' ' der in Fig.10 unteren Klemmplatte 6 im Bezug auf die Nocken 23' ' ' der in Fig.10 oberen Klemmplatte 6 in Längsrichtung versetzt sind. Beim Zusammenbauen der Klemmplatten 6 behindern sich die Nocken 23 ' ' ' der Klemmbacken 6 gegenseitig nicht.

Die Fig.10 bis 12 lassen an ihren Enden 6', 6" jeweils Längsnuten 75 erkennen, die entweder als Bohrungs- oder als Gewindebohrungsabschnitte ausgeführt sind. Einander benachbarte Längsnuten 75 der Klemmbacken 6 sind jeweils gleich lang. Gemeinsam bilden sie eine Einsteck- oder eine Einschraubbohrung, die einem Befestigungsvorgang dienen kann. Denkt man sich den zweiten Profilstab 8 der Fig.12 weg, so könnte von dessen Position aus eine Schraube in die Gewindebohrung zwischen den Enden 6' zwischen den Klemmbacken 6 eingeschraubt werden und dabei beispielsweise eine Platte oder einen einen Schraubenkopf abstützenden Profilstab zentral am Profilstab 4 befestigen, nämlich entsprechend der Ausbildung des Zwischenraums 11 oder direkt an der Stirnseite des Profilstabs 4 anliegend, wenn der Verbinder 1 völlig in den Profilstab 4 hineingesteckt wäre, wobei dann allerdings ein seitlicher Zugriff zum Fixierelement im Profilstab 4 notwendig wäre.

Eine in Fig.11 dargestellte Besonderheit der Klemmbacken 6 besteht darin, daß sie von Ende 6' bis Ende 6 " gewölbt ausgebildet sind. Die Wölbung beider Klemmbacken 6 ist gegensinnig, so daß sich der in Fig.11 dargestellte Abstand 82 ergibt. In diesem Bereich enden die Rippen 23' '. Hier ist eine Verformung der Klemmbacken 6 möglich, wenn das Fixierelement die Klemmbacken 6 zusammenzudrücken sucht. Infolgedessen erfolgt eine Durchbiegung der Klemmbacken 6 so lange, bis die Klemmflächen 81 flächenförmig auf den Klemmstegen 10 aufliegen. Die Verformung der Klemmbacken 6 wird dann gestoppt, so daß die gewünschte flächenförmige Auflage der Klemmflächen 31 auf den Innenstegen 10 erreicht ist, mit der der erforderliche Kraftschluß zwischen dem Verbinder 1 und dem Profilstab 4 hergestellt wird. Dabei sind die Klemmbacken 6 so ausgebildet, daß sie im Bereich des Fixierelements beziehungsweise der Zangenschenkel 19 nicht aufeinander aufliegen. Sie haben vielmehr den in Fig.12 dargestellten Abstand 74 voneinander.

Die Fig.11, 12 zeigen über das vorbeschriebene hinaus einen Zusammenbau der beiden Klemmbacken 6 mit U-förmigen Federbügeln 76. Die Federbügel sind außen mittig angeordnet, behindern also einen etwaigen Eingriff in die Längsnuten 75 nicht. Die Federbügel 76 sind beispielsweise aus Draht ausgebildet und haben aufeinander zu abgewinkelte Enden 76', die in Halteausnehmungen 82 der Klemmbacken 6 eingreifen, wie Fig.12 zeigt.

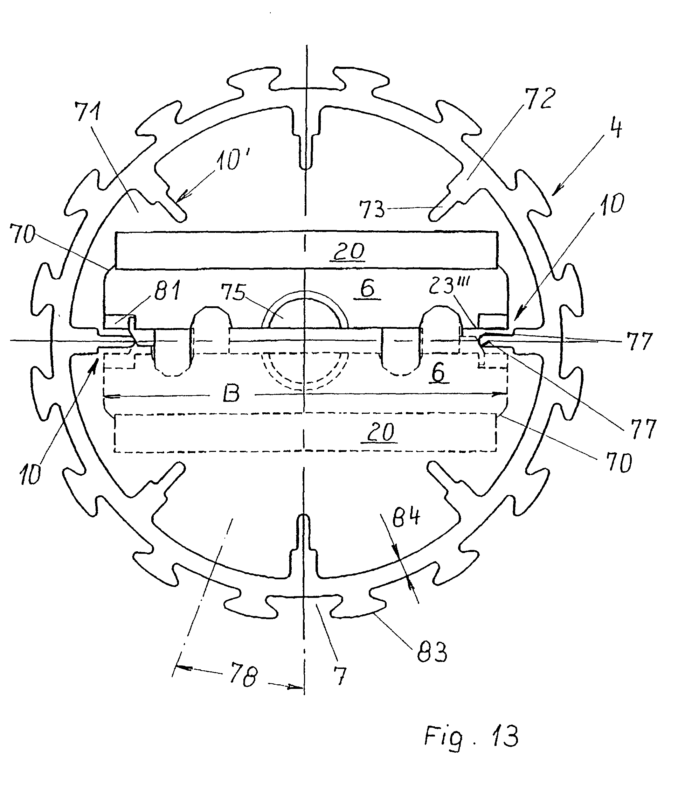

In Fig.13 ist eine vergrößerte Stirnansicht eines Profilstabs 4 dargestellt, in den Klemmbacken 6 gemäß Fig.11 eingebaut sind, das heißt die Klemmbacken 6 sind noch nicht zusammengespannt. Die zwischen beiden Klemmbacken gelegenen Innenstege 10 sind also noch nicht festgeklemmt. Es sind insgesamt acht über den Innenumfang des Profilstabs 4 verteilte Innenstege 10 vorhanden, also mit einer Teilung von fünfundvierzig Winkelgrad. Im Außenumfang des Profilstabs 4 sind Mantelnuten 7 vorhanden, die mit in Bezug auf die Teilung der Klemmstege halber Teilung 78 angeordnet sind, also über zweiundzwanzigeinhalb Winkelgrad. Dabei ist die Anordnung der Mantelnuten so getroffen, das Innenstege 10 und Mantelnuten 11 fluchten. Die Innenstege 10 sitzen also mittig zu den Mantelnuten beziehungsweise im gleichen Abstand zu von den Mantelnuten gebildeten Außenstegen 83. Infolgedessen verstärken die Innenstege 10 den Querschnitt des Profilstabs gegen Durchbiegung, insbesondere auch gegen Verformung der vergleichsweise geringen Wandstärke 84 im Bereich einer Mantelnut. Das ist von besonderer Bedeutung, wenn Verbinder 1 zum Beispiel gemäß der Fig.11, 12 eine Mantelnut 7 freilassend am zweiten Profilstab 8 angreift, so daß also zwei Außenstege 82 übergriffen werden. Der zwischen beiden Außenstegen 83 gelegene Wandabschnitt wird gegen Durchbiegung beziehungsweise Eindrücken entschieden versteift.

In Fig.13 ist die obere Klemmplatte 6 mit ausgezogenen Strichen und die untere Klemmplatte 6 mit gestrichelten Strichen dargestellt. Die Anordnung der Klemmbacken im Querschnitt des Profilstabs 4 ist so zu treffen, daß die Innenstege 10 möglichst schmal sein können, also wenig weit in das Innere des Profilstabs 4 hineinragen. Infolgedessen sind die Klemmbacken 6 mit ihren Längskanten 70 nahe der Innenwand des Profilstabs 4 in einem Bereich 71 angeordnet, der zwischen zwei einander benachbarten Innenstegen 10 ausgebildet ist. In Fig.13 ist jedem festzuklemmenden Innensteg 10 ein Innensteg 10' benachbart und in den zwischen diesen beiden Stegen 10, 10' gelegenen Bereich 71 greifen die Klemmbacken 6 ein. Infolgedessen ist hier eine stabile Ausbildung der Klemmbacken 6 möglich und es kann mit solchen Klemmbacken eine stabile, nämlich durch hohe Flächenpressung gekennzeichnete Klemmung der Klemmflächen 31 auf den Innenstegen 10 erfolgen.

Die Stirnansicht der Klemmplatten 6 läßt die Positionierung der Nocken 23' ' ' in Bezug auf die Innenstege 10 erkennen. An den Nocken sind Schrägflächen 77 ausgebildet. Die Schrägflächen 77 der Nocken 23 ' ' ' der oberen Klemmplatte 6 stehen in einem stumpfen Winkel zu den Klemmflächen 77 der Nocken 23' ' ' der unteren Klemmplatten 6. In den vorgenannten stumpfen Winkel greifen die freien Kanten der Innenstege 10 ein. Infolgedessen zentrieren sich die Klemmbacken 6 beim Einschieben in die Stirnseiten des Profilstabs 4 und auch beim Festspannen der Klemmbacken 6 mit dem Fixierelement, so daß eine zutreffende Positionierung der Klemmflächen 81 auf den Innenstegen erreicht wird.

Die Figuren zeigen Innenstege 10 unterschiedlicher Querschnittsausbildung. Während die Innenstege 10 beispielsweise in Fig.1 eine einzige Dicke besitzen, sind die Innenstege der Fig.13 gestuft ausgebildet. Alle Innenstege 10, 10' besitzen rohrwandseitig jeweils eine dicke Basis 72, deren Dicke gleich der Rohrwandstärke 84 ist beziehungsweise größer. An die Basis 72 radial anschließend sind Klemmstreifen 73 ausgebildet, deren Dicke beispielsweise der Dicke der Innenstege 10 der Fig.1 entspricht. Diese Dicke ist darauf abgestimmt, daß die Klemmstege 10 von den Klemmbacken 6 festgeklemmt werden.

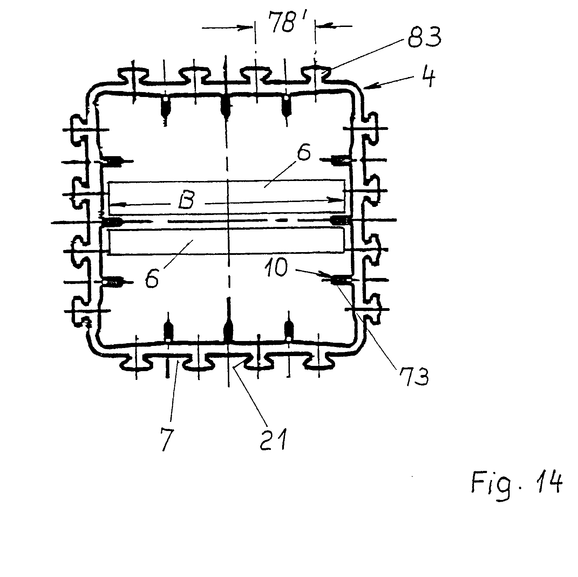

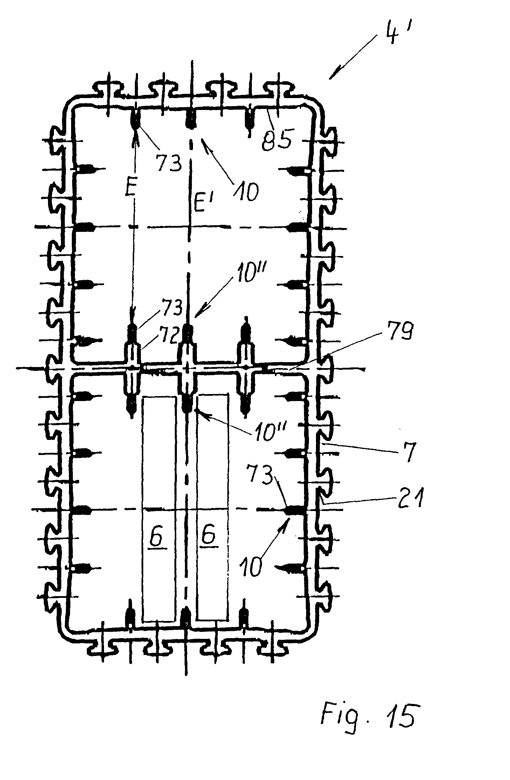

Der Einsatz einer Basis 72 in Verbindung mit Klemmstreifen 73 hängt davon ab, wieweit die Innenstege 10 beziehungsweise deren Klemmstreifen 73 von einander entfernt sind. Diese Entfernung E, vergleiche zum Beispiel Fig.15 oben, ist von der Breite B der Klemmbacken 6 abhängig; denn diese sollen die Klemmstreifen 73 mit den Klemmflächen 81 sicher erfassen können. Und die Breite der Klemmstreifen 73 ist praktisch auf die Breite der Klemmflächen 81 abgestimmt. Sollten also Profilstäbe 4 unterschiedlicher Querschnittsgestaltungen geklemmt werden, nämlich mit Verbindern 1 derselben Ausgestaltung ihrer Klemmbacken 6, so ist die Breite der Basis 72 zu variieren. Fig.14 zeigt einen quadratischen Querschnitt eines Profilstabs 4, dessen Innenwände 85 mit Innenstegen 10 besetzt sind. Diese Innenstege 10 sind aber lediglich als Klemmstreifen 73 ausgebildet. Die Breite der Basis 72 ist Null. Das kommt daher, daß die Breite B der angewendeten Klemmbacken 6 gleich der Breite der Klemmbacken 6 des Profilstabs 4 der Fig.11 sind. Der betreffende Verbinder 1 soll also sowohl für das quadratische Profil des Profilstabs 4 eingesetzt werden, als auch für das kreiszylindrische Profil des Profilstabs 4 der Fig. 11. Das ist durch Vergleich des Profils der Fig.14 mit dem des Profilstabs 8 der Fig.11 ersichtlich, wobei vorausgesetzt ist, daß die Profilstäbe 4, 8 gleich und gleich groß profiliert sind. Die Breite B beider Verbinder 1 ist gleich groß. Der Verbinder 1 kann bei unterschiedlichen Profilen angewendet werden. Die Basis 72 dient dem Längenbeziehungsweise dem Breitenausgleich.

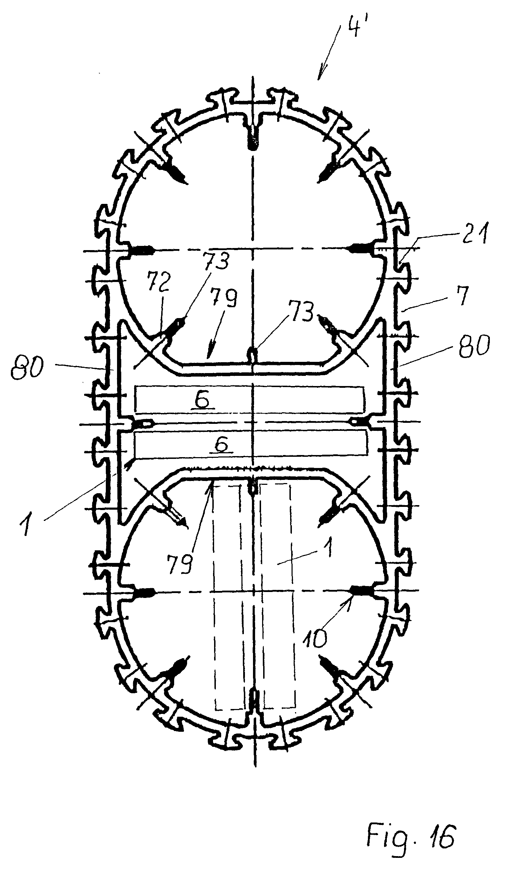

Ausgleichsmaßnahmen sind auch erforderlich, wenn die Querschnitte der Profilstäbe 4, 8 nicht kreiszylindrisch oder quadratisch sind, sondern länglich. Entsprechende Profilstäbe 4' zeigen die Fig.15, 16. Fig.15 zeigt einen doppelquadratischen Profilstab 4' mit einer mittig angeordneten Querwand 79. Die Querwand 79 ist mit Innenstegen 10" besetzt, die jeweils eine Basis 72 und einen Klemmstreifen 73 aufweisen. Der Abstand zwischen den Klemmstreifen 73 und den mit den Innenstegen 10 ' ' fluchtenden Innenstegen 10 der parallel gegenüberliegenden Innenwand 85 der Schmalwand des Stabs 4' ist mit E' bezeichnet. Er entspricht der Entfernung E zwischen den beiden Klemmstegen 73, die auf einer Seite den Innensteg 10 und auf der anderen Seite mit einer Basis 72 den Innensteg 10' ' bilden. Dementsprechend ist E' also ebenso wie E auf die Breite B der Klemmbacken 6 abgestimmt.

Fig.16 zeigt einen Profilstab 4' länglichen Querschnitts, der im Grunde aus zwei kreiszylindrischen, parallel angeordneten Profilstäben gebildet ist, die von Wandabschnitten 80 zu einem außen geschlossenen Querschnitt miteinander verbunden sind. Dementsprechend sind innen zwei Querwände 79 vorhanden, die in der Mitte abgeplattet sind, um Platz für die Anordnung eines Verbinders 1 zu schaffen. Mittig auf den Wandabschnitten 80 sind Innenstege 10 angeordnet, an denen die Klemmbacken 6 des Verbinders 1 festgeklemmt werden. Die Abplattung ergibt, daß in den abgeplatteten Bereichen der Querwände 79 lediglich Klemmstreifen 73 vorhanden sein müssen, um dort bedarfsweise einen Verbinder 1 anzuordnen, der einerseits einen Klemmstreifen 73 und andererseits einen von einer Basis getragenen Klemmstreifen einzuklemmen vermag.

Die Anordnungen der Innenstege 10 lassen erkennen, daß die Verbinder 1 in unterschiedlichen Winkelstellungen relativ zu den Profilstäben 4, 4', 8 angeordnet werden können. Damit ergibt sich eine Vielfalt konstruktiver Möglichkeiten der Anordnung von Profilstäben relativ zueinander. Das kann insbesondere aus Fig.16 abgeleitet werden. An in der Darstellung der Fig.16 horizontal angeordneten Verbindern 1 können in der Darstellungsebene horizontal verlaufende Profilstäbe angeordnet werden, während bei vertikal angeordneten Verbindern 1 vertikal verlaufende Profilstäbe anzuschließen sind. In Fig.16 kann beispielsweise ein Profilstab mit einem kreiszylindrischen oder einem quadratischen Querschnitt vertikal angeschlossen werden. Bei entsprechenden Breitenabmessungen decken solche zweiten Profilstäbe die Stirnseite des Profilstabs 4' ab. Es ergibt sich eine besonders stabile Verbindung, wenn oberhalb der oberen Querwand 79 und unterhalb der unteren Querwand 79 jeweils ein Verbinder 1 eingesetzt wird. Eine solche Verbindung ist beispielsweise vorteilhaft für Tischkonstruktionen, bei denen der zweite Profilstab als Tischbein ausgebildet sein könnte, während der in Fig.16 dargestellte Profilstab 4' die Tischplatte über eine größere Länge unterstützt, ohne daß dabei ein weiteres Tischbein eingesetzt wird. Aus Profilstäben 4' gemäß Fig.16 könnte ein sehr stabiler Rahmen ausgebildet werden, wenn vier Profilstäbe 4' horizontal miteinander verbunden würden. Es ist dann an jeder Verbindungsstelle möglich, einen Verbinder 1 einzusetzen, nämlich einen oben parallel zur oberen Querwand 79, einen zwischen den beiden Querwänden 79, wie dargestellt, und einen unterhalb der unteren Querwand 79. Es ergebe sich dementsprechend also eine Dreifachverbindung.

Voraussetzung bei den Verbindungen ist es, daß die miteinander zu verbindenden Profilstäbe 4, 4' Teilungen 78 ihrer Mantelnuten 7 aufweisen, beziehungsweise gleich große oder doppelt große Teilungen 78' der von diesen gebildeten Außenstege 83. Dabei ist nicht von Bedeutung, ob die in den Figuren dargestellten Besetzungen mit Außenstegen 83 ringsum vorhanden sind. Ein anzuschließender erster Profilstab kann aussen völlig glatt sein, sofern er nur innen die erforderlichen Klemmstege aufweist. Wichtig ist nur, daß an den anzuschliessenden Flächen zweiter Profilstäbe entsprechende Ausgestaltungen mit Mantelnuten 7 und Außenstegen 83 vorhanden sind. Beispielsweise können plattenartige Hochprofile als Profilstäbe beziehungsweise Hohlprofilstäbe eingesetzt werden, wenn sie an einer Breitwand so ausgestaltet sind, daß die Zangenschenkel 19 der Verbinder 1 anzuklemmen sind. Statt der vorbeschriebenen Teilungsausbildung kann auch eine Teilung akzeptiert werden, die doppelt so groß ist, wenn die verwendeten Außenstege 83 die Möglichkeit zum Eingreifen in Mantelnuten 7 bilden, die zwischen sich nur einen einzigen massiven Außensteg 83 aufweisen.

## Patentansprüche

1. T-Verbindung zweier Profilstäbe, mit einem Verbinder (1), der zwei längliche, quer von einem Fixierelement (5) verspannbare Klemmbacken (6) aufweist, die in hinterschnittenen Mantelnuten (7) eines zweiten Profilstabs (8) zangenartig schließend verklemmbar sind und die in einen Hohlraum (3) eines ersten Profilstabs (4) stirnseitig eingreifen sowie an zwischen ihnen angeordneten rohrparallelen Innenstegen (10) des ersten Profilstabs (4) festklemmbar sind, **dadurch gekennzeichnet, daß** der erste Profilstab (4) mehr als zwei über seinen Innenumfang gleichmäßig verteilte und jeweils paarweise diametral gegenüberliegende Innenstege (10) aufweist, deren Erstreckung durch den ersten Profilstab (4) unvollständig ist, daß verspannte Klemmbacken (6) ausschließlich Innenstege (10) längs linienförmig und/oder flächenförmig anliegend festklemmen, und daß die Klemmbacken (6) mit Längskanten (70) jeweils in einen zwischen dem festgeklemmten (10) und dessen benachbarten (10') Innensteg gelegenen Zwischenraum (71) eingreifen.

2. T-Verbindung nach Anspruch 1, **dadurch gekennzeichnet, daß** die Innenstege (10) unter fünfundvierzig Winkelgrad über den Innenumfang des ersten Profilstabs (4) verteilt sind.

3. T-Verbindung nach Anspruch 1 oder 2, **dadurch gekennzeichnet, daß** beide Profilstäbe (4,8) mit Mantelnuten ausgebildet sind und die Innenstege (10) jeweils mit einer der Mantelnuten (7) fluchten.

4. T-Verbindung nach einem oder mehreren der Ansprüche 1 bis 3, **dadurch gekennzeichnet, daß** die Innenstege (10) jeweils eine dicke Basis (72) und einen davon ausgehend radial erstreckten, zwischen den Klemmbacken (6) festklemmbaren dünneren Klemmstreifen (73) aufweisen.

5. T-Verbindung nach Anspruch 4, **dadurch gekennzeichnet, daß** die Erstreckung der dicken Basis (72) der Innenstege (10) in radialer Richtung bei vorgegebener Breite (B) der Klemmbacken (6) von einer Entfernung (E) zweier einander diagonal gegenüberliegender Klemmstreifen (73) bestimmt ist.

6. T-Verbindung nach einem oder mehreren der Ansprüche 1 bis 5, **dadurch gekennzeichnet, daß** das Fixierelement (5) des Verbinders (1) in einer Montageendstellung der Profilstäbe (4, 8) durch einen Zwischenraum (11) zwischen einem Ende (12) des ersten und einer Mantelfläche (13) des zweiten Profilstabs (8) hindurch bedienbar ist.

7. T-Verbindung nach einem oder mehreren der Ansprüche 1 bis 6, **dadurch gekennzeichnet, daß** der Verbinder (1) aus zwei als Einzelteile ausgebildeten Klemmbacken (6) besteht, die von dem Fixierelement (5) verstellbar gekuppelt sind.

8. T-Verbindung nach einem oder mehreren der Ansprüche 1 bis 7, **dadurch gekennzeichnet, daß** ein als Schraube ausgebildetes Fixierelement (5) bezüglich der Längsrichtung (15) des ersten Profilstabs (4) geneigt und/oder das Ende (12) des ersten Profilstabs (4) mit Abstand (11) vom zweiten Profilstab (8) angeordnet ist.

9. T-Verbindung nach einem oder mehreren der Ansprüche 1 bis 8, **dadurch gekennzeichnet, daß** die als Fixierelement (5) dienende Schraube mit ihrem Kopf (16) zum zweiten Profilstab (8) hin geneigt ist.

10. T-Verbindung nach einem oder mehreren der Ansprüche 1 bis 9, **dadurch gekennzeichnet, daß** der Verbinder (1) für das Fixierelement (5) sowohl ein senkrecht als auch ein schräg zu den Klemmbacken (6) verlaufendes Loch aufweist.

11. T-Verbindung nach einem oder mehreren der Ansprüche 1 bis 10, **dadurch gekennzeichnet, daß** der Verbinder (1) in einer Klemmbacke (6) ein Langloch (18) für den Einsatz des Fixierelements (5) aufweist und/oder daß die zangenschenkel (19) des Verbinders (1) mit balligen Schenkelenden (20) in den Hinterschneidungen (21) der Mantelnuten (7) in unterschiedlichen Winkelendstellungen des Verbinders (1) an dem zweiten Profilstab (8) festklemmbar sind.

12. T-Verbindung nach einem oder mehreren der Ansprüche 1 bis 11, **dadurch gekennzeichnet, daß** die Klemmbacken (6) in relative Quer- und/oder Parallelverschiebungen verhinderndem, gegenseitigem Formeingriff (23) stehen.

13. T-Verbindung nach einem oder mehreren der Ansprüche 1 bis 12, **dadurch gekennzeichnet, daß** an den Innenflächen (22) der Klemmbacken (6) ein sägezahnförmiger, gegenseitiger Formeingriff besteht und/oder daß sich längs erstreckende, in Längsnuten (23') der anderen Klemmbacke (6) eingreifende Rippen (23'') und/oder Nocken (23^{IV}) vorhanden sind.

14. T-Verbindung nach einem oder mehreren der Ansprüche 1 bis 13, **dadurch gekennzeichnet, daß** ein Zangenschenkel (19) einer Klemmbacke (6) eines Verbinders (1) maximal eine Hälfte (40) des Querschnitts (25) einer Mantelnut (7) des zweiten Profilstabs (8) einnimmt, in deren andere Hälfte (41) ein Zangenschenkel (19) eines anderen Verbinders (1) einbaubar ist.

15. T-Verbindung nach einem oder mehreren der Ansprüche 1 bis 14, **dadurch gekennzeichnet, daß** der Verbinder (1) und das Ende (12) des ersten Profilstabs (4) nicht über die Mittelebenen (26) zweier klemmbackenbesetzter Mantelnuten (7) hinausragen, die beide durch die Längsachse (9') des zweiten Profilstabs (8) verlaufen.

16. T-Verbindung nach einem oder mehreren der Ansprüche 1 bis 15, **dadurch gekennzeichnet, daß** die Zangenschenkel (19) formschlüssig an eine Hinterschneidung (21) einer Mantelnut (7) des zweiten Profilstabs (8) angepaßt sind.

17. T-Verbindung nach einem oder mehreren der Ansprüche 1 bis 16, **dadurch gekennzeichnet, daß** die Klemmbacken (6) bei am zweiten Profilstab (8) verklemmten Zangenschenkeln (19) ein linien- und/oder flächenförmiges Festklemmen der Innenstege (10) gestattenden Abstand (74) voneinander aufweisen.

18. T-Verbindung nach einem oder mehreren der Ansprüche 1 bis 17, **dadurch gekennzeichnet, daß** beide Profilstäbe (4, 8) sowohl Innenstege (10) als auch Mantelnuten (7) aufweisen.

19. T-Verbindung nach einem oder mehreren der Ansprüche 1 bis 18, **dadurch gekennzeichnet, daß** der erste Profilstab (4) in einem Abstand zu dem zweiten Profilstab (8) angeordnet ist und dabei das Fixierelement (5) frei läßt.

20. T-Verbindung nach einem oder mehreren der Ansprüche 1 bis 19, **dadurch gekennzeichnet, daß** der das Fixierelement (5) freilassende Zwischenraum (11) zwischen einem abgelängten Ende (12) des ersten (4) und einem polygonen oder gekrümmten Mantel (13) des zweiten Profilstabs (8) gebildet ist.

21. T-Verbindung nach einem oder mehreren der Ansprüche 1 bis 20, **dadurch gekennzeichnet, daß** eine zwischen dem ersten (4) und dem zweiten Profilstab (8) angeordnete Abdeckkappe (29) den Verbinder (1) und die Stirnseite (12) des ersten Profilstabes (4) abdeckt.

22. T-Verbindung nach einem oder mehreren der Ansprüche 1 bis 21, **dadurch gekennzeichnet, daß** der Verbinder (1) aus ihn versteifend geformtem Blech mit jeweils zwei einen Zangenschenkel (19) aufweisenden Klemmbacken (6) einstückig aufgebaut ist.

23. T-Verbindung nach einem oder mehreren der Ansprüche 1 bis 22, **dadurch gekennzeichnet, daß** die Klemmbacken (6) massiv ausgebildet sind.

24. T-Verbindung nach einem oder mehreren der Ansprüche 1 bis 23, **dadurch gekennzeichnet, daß** die länglichen Klemmbacken (6) von Ende (6') zu Ende (6'') gegensinnig gewölbt sind.

25. T-Verbindung nach einem oder mehreren der Ansprüche 1 bis 24, **dadurch gekennzeichnet, daß** die Klemmbacken (6) an ihren Enden (6', 6'') mit Längsnuten (75) versehen sind, die bei verspannten Klemmbacken (6) Umfangsabschnitte einer Bohrung und/oder einer Gewindebohrung sind.

26. T-Verbindung nach einem oder mehreren der Ansprüche 1 bis 25, **dadurch gekennzeichnet, daß** die Klemmbacken (6) von Federbügeln (76) paarweise zusammengeklammert sind.

27. T-Verbindung nach einem oder mehreren der Ansprüche 1 bis 26, **dadurch gekennzeichnet, daß** die Klemmbacken (6) beidseitig mit an den Innenstegen (10) zentrierenden Schrägflächen (77) versehen sind.

28. T-Verbindung nach einem oder mehreren der Ansprüche 1 bis 27, **dadurch gekennzeichnet, daß** die Klemmbacken (6) des Verbinders (1) einsteckseitig kugelschichtförmig ausgebildet sind.

29. T-Verbindung nach einem oder mehreren der Ansprüche 1 bis 28, **dadurch gekennzeichnet, daß** beide Profilstäbe (4, 8) runde Hohlprofile sind.

30. T-Verbindung nach einem oder mehreren der Ansprüche 1 bis 29, **dadurch gekennzeichnet, daß** die Klemmbacken (6) am zweiten Profilstab (9) eine Mantelnut (7) freilassend verklemmt sind.

31. T-Verbindung nach einem oder mehreren der Ansprüche 1 bis 30, **dadurch gekennzeichnet, daß** Profilstäbe (4, 8) bedarfsweise unterschiedlichen Querschnitts Mantelnuten (7) gleicher Teilung (78) aufweisen, und/oder daß die Innenstege (10) beider Profilstäbe (4, 8) in derselben Zuordnung zueinander und/oder mit der Teilung (78) der Mantelnuten (7) angeordnet sind.

32. T-Verbindung nach einem oder mehreren der Ansprüche 1 bis 31, **dadurch gekennzeichnet, daß** Profilstäbe (4') länglichen Querschnitts mindestens eine unterteilende Querwand (79) aufweisen, die mit Innenstegen (10'') besetzt ist, deren Abstand (E') von fluchtenden Innenstegen (10) der Profilstäbe (4') und/oder weiterer Querwände (79) auf die Breite (B) der Klemmbacken (6) abgestimmt ist.

33. T-Verbindung nach Anspruch 32, **dadurch gekennzeichnet, daß** zwischen zwei Querwänden (79) eines Profilstabs (4') länglichen Querschnitts Platz für die Anordnung eines Verbinders (1) ist, dessen Klemmbacken (6) an Innenstegen (10) zweier die Querwände (79) miteinander verbindender Wandabschnitte (80) des Profilstabs (4') festklemmbar sind.

## Claims

1. T-connection between two profiled rods, having a connector (1) which has two elongate clamping jaws (6) which can be tensioned transversely by a fixing element (5), which can be clamped in a closing manner in the manner of a tongue in under-cut surface grooves (7) of a second profiled rod (8) and which engage at the end face in a hollow chamber (3) in a first profiled rod (4) and can be fixedly clamped to inner webs (10) of the first profiled rod (4) which are disposed between them and are in parallel with the pipe, **characterised in that** the first profiled rod (4) has more than two inner webs (10) which are uniformly distributed over its inner periphery, which lie diametrically opposite each other in pairs and which do not extend completely through the first profiled rod (4), that tensioned clamping jaws (6) exclusively clamp inner webs (10) in a longitudinally linear manner and/or in a surface-contacting arrangement, and that the clamping jaws (6) engage with longitudinal edges (70) in each case in an intermediate space (71) between the fixedly clamped inner web (10) and its adjacent inner web (10').

2. T-connection as claimed in claim 1, **characterised in that** the inner webs (10) are distributed over the inner periphery of the first profiled rod (4) at angles of forty five degrees.

3. T-connection as claimed in claim 1 or 2, **characterised in that** the two profiled rods (4, 8) are formed with surface grooves and the inner webs (10) are aligned with a respective one of the surface grooves (7).

4. T-connection as claimed in any one or several of claims 1 to 3, **characterised in that** the inner webs (10) each have a thick base (72) and a radially extending thinner clamping strip (73) issuing therefrom which can be fixedly clamped between the clamping jaws (6).

5. T-connection as claimed in claim 4, **characterised in that** the extension of the thick base (72) of the inner webs (10) in the radial direction when the clamping jaws (6) are of a predetermined width.(B) is determined from a distance (E) between two clamping strips (73) which are diagonally opposite each other.

6. T-connection as claimed in any one or several of claims 1 to 5, **characterised in that** the fixing element (5) of the connector (1) in a final assembly position of the profiled rods (4, 8) can be operated through an intermediate space (11) between one end (12) of the first profiled rod and an outer surface (13) of the second profiled rod (8).

7. T-connection as claimed in any one or several of claims 1 to 6, **characterised in that** the connector (1) consists of two clamping jaws (6) which are formed as individual parts and which are coupled in an adjustable manner by the fixing element (5).

8. T-connection as claimed in any one or several of claims 1 to 7, **characterised in that** a fixing element (5) formed as a screw is inclined with respect to the longitudinal direction (15) of the first profiled rod (4) and/or the end (12) of the first profiled rod (4) is disposed at a spaced disposition (11) from the second profiled rod (8).

9. T-connection as claimed in any one or several of claims 1 to 8, **characterised in that** the screw serving as the fixing element (5) is inclined with its head (16) towards the second profiled rod (8).

10. T-connection as claimed in any one or several of claims 1 to 9, **characterised in that** for the fixing element (5) the connector (1) has a hole which extends perpendicularly and also a hole which extends in an inclined manner with respect to the clamping jaws (6).

11. T-connection as claimed in any one or several of claims 1 to 10, **characterised in that** in one clamping jaw (6) the connector (1) has an elongate hole (18) for entry of the fixing element (5) and/or that the tongue limbs (19) of the connector (1) can be fixedly clamped with crowned limb ends (20) in the under-cuts (21) of the surface grooves (7) in different angular end positions of the connector (1) on the second profiled rod (8).

12. T-connection as claimed in any one or several of claims 1 to 11, **characterised in that** the clamping jaws (6) are in mutual form-fit engagement (23) preventing transverse and/or parallel relative displacements.

13. T-connection as claimed in any one or several of claims 1 to 12, **characterised in that** a saw-tooth-like mutual form-fit engagement exists at the inner surfaces (22) of the clamping jaws (6) and/or that longitudinally extending ribs (23") and/or projections (23^{IV}) engaging in longitudinal grooves (23') of the other clamping jaw (6) are provided.

14. T-connection as claimed in any one or several of claims 1 to 13, **characterised in that** a tongue limb (19) of a clamping jaw (6) of a connector (1) receives at most one half (40) of the cross-section (25) of a surface groove (7) of the second profiled rod (8), a tongue limb (19) of another connector (1) being able to be installed in the other half (41) thereof.

15. T-connection as claimed in any one or several of claims 1 to 14, **characterised in that** the connector (1) and the end (12) of the first profiled rod (4) do not protrude beyond the middle plane (26) of two surface grooves (7) occupied by clamping jaws, which surface grooves both extend through the longitudinal axis (9') of the second profiled rod (8).

16. T-connection as claimed in any one or several of claims 1 to 15, **characterised in that** the tongue limbs (19) are adapted in a form-fit manner to an undercut (21) of a surface groove (7) of the second profiled rod (8).

17. T-connection as claimed in any one or several of claims 1 to 16, **characterised in that** the clamping jaws (6) in the case of tongue limbs (19) clamped to the second profiled rod (8) are at a spaced disposition (74) with respect to each other permitting the inner webs (10) to be fixedly clamped in a linear manner and/or in a surface-contacting arrangement.

18. T-connection as claimed in any one or several of claims 1 to 17, **characterised in that** both profiled rods (4, 8) have both inner webs (10) and surface grooves (7).

19. T-connection as claimed in any one or several of claims 1 to 18, **characterised in that** the first profiled rod (4) is disposed at a spaced disposition with respect to the second profiled rod (8) and thus leaves the fixing element (5) free.

20. T-connection as claimed in any one or several of claims 1 to 19, **characterised in that** the intermediate space (11) leaving the fixing element (5) free is formed between a shortened end (12) of the first profiled rod (4) and a polygonal or curved surface (13) of the second profiled rod (8).

21. T-connection as claimed in any one or several of claims 1 to 20, **characterised in that** a covering cap (29) disposed between the first profiled rod (4) and the second profiled rod (8) covers the connector (1) and the end side (12) of the first profiled rod (4).

22. T-connection as claimed in any one or several of claims 1 to 21, **characterised in that** the connector (1) is constructed as one piece from formed sheet metal which stiffens it and has in each case two clamping jaws (6) comprising a tongue limb (19).

23. T-connection as claimed in any one or several of claims 1 to 22, **characterised in that** the clamping jaws (6) are formed in a solid manner.

24. T-connection as claimed in any one or several of claims 1 to 23, **characterised in that** the elongate clamping jaws (6) are curved in opposite directions from end (6') to end (6").

25. T-connection as claimed in any one or several of claims 1 to 24, **characterised in that** the clamping jaws (6) are provided on their ends (6', 6") with elongate grooves (75) which are peripheral portions of a bore and/or of a threaded bore when the clamping jaws (6) are tensioned.

26. T-connection as claimed in any one or several of claims 1 to 25, **characterised in that** the clamping jaws (6) are clamped together in pairs by spring clips (76).

27. T-connection as claimed in any one or several of claims 1 to 26, **characterised in that** the clamping jaws (6) are provided on both sides with inclined surfaces (77) centring on the inner webs (10).

28. T-connection as claimed in any one or several of claims 1 to 27, **characterised in that** the clamping jaws (6) of the connector (1) are formed in the manner of a spherical segment on the insertion side.

29. T-connection as claimed in any one or several of claims 1 to 28, **characterised in that** both profiled rods (4, 8) are round hollow profiles.

30. T-connection as claimed in any one or several of claims 1 or 29, **characterised in that** the clamping jaws (6) are clamped on the second profiled rod (9) leaving a surface groove (7) free.

31. T-connection as claimed in any one or several of claims 1 to 30, **characterised in that** profiled rods (4, 8) which may, if necessary, be of different cross-sections, have surface grooves (7) which are uniformly distributed (78), and/or that the inner webs (10) of the two profiled rods (4, 8) are disposed allocated to each other in the same way and/or distributed in the same way as the surface grooves (7) are distributed (78).

32. T-connection as claimed in any one or several of claims 1 to 31, **characterised in that** profiled rods (4') with an elongate cross-section have at least one dividing transverse wall (79) which is occupied by the inner webs (10"), the spacing (E') of which from the aligned inner webs (10) of the profiled rods (4') and/or further transverse walls (79) is matched to the width (B) of the clamping jaws (6).

33. T-connection as claimed in claim 32, **characterised in that** between two transverse walls (79) of a profiled rod (4') with an elongate cross-section there is space for the arrangement of a connector (1), the clamping jaws (6) of which can be fixedly clamped on inner webs (10) of two wall portions (80) of the profiled rod (4') which connect the transverse walls (79) to each other.

## Revendications

1. Assemblage en T de deux barres profilées, comportant un raccord (1) qui présente deux mâchoires de serrage allongées (6) qui sont aptes à être serrées transversalement par un élément de fixation (5), qui sont aptes à être bloquées dans le sens d'une fermeture, à la manière de pinces, dans des rainures latérales contre-dépouillées (7) d'une seconde barre profilée (8), qui pénètrent dans une cavité (3) d'une première barre profilée (4), côté frontal, et qui sont aptes à être calées sur des nervures intérieures (10) de la première barre profilée (4), disposées entre elles et parallèles au tube, **caractérisé en ce que** la première barre profilée (4) présente plus de deux nervures intérieures (10) qui sont réparties régulièrement sur sa circonférence intérieure, qui sont diamétralement opposées par paires et dont l'extension à travers la première barre profilée (4) est incomplète, **en ce que** les mâchoires de serrage (6) serrées calent uniquement des nervures intérieures (10), en étant appliquées linéairement en longueur et/ou superficiellement, et **en ce que** les mâchoires de serrage (6) pénètrent avec des bords longitudinaux (70) dans un intervalle (71) situé entre la nervure intérieure calée (10) et la nervure intérieure (10') voisine de celle-ci.

2. Assemblage en T selon la revendication 1, **caractérisé en ce que** les nervures intérieures (10) sont réparties à quarante-cinq degrés sur la circonférence intérieure de la première barre profilée (4).

3. Assemblage en T selon la revendication 1 ou 2, **caractérisé en ce que** les deux barres profilées (4, 8) sont pourvues de rainures latérales et chaque nervure intérieure (10) se trouve dans l'alignement de l'une des rainures (7).

4. Assemblage en T selon l'une au moins des revendications 1 à 3, **caractérisé en ce que** les nervures intérieures (10) ont une base épaisse (72) et une bande de serrage plus mince (73) qui s'étend radialement à partir de celle-ci et qui est apte à être calée entre les mâchoires de serrage (6).

5. Assemblage en T selon la revendication 4, **caractérisé en ce que** l'extension de la base épaisse (72) des nervures intérieures (10) dans le sens radial, pour une largeur prédéfinie (B) des mâchoires de serrage (6), est définie par un écartement (E) de deux bandes de serrage (73) opposées en diagonale.

6. Assemblage en T selon l'une au moins des revendications 1 à 5, **caractérisé en ce que** l'élément de fixation (5) du raccord (1) est apte à être actionné, dans une position de montage définitive des barres profilées (4, 8), à travers un intervalle (11) entre une extrémité (12) de la première barre profilée et une surface latérale (13) de la seconde barre profilée (8).

7. Assemblage en T selon l'une au moins des revendications 1 à 6, **caractérisé en ce que** le raccord (1) se compose de deux mâchoires de serrage (6), conçues comme des éléments individuels, qui sont accouplées de manière réglable par l'élément de fixation (5).

8. Assemblage en T selon l'une au moins des revendication 1 à 7, **caractérisé en ce qu'**un élément de fixation (5) conçu comme une vis est incliné par rapport au sens longitudinal (15) de la première barre profilée (4) et/ou l'extrémité (12) de celle-ci est disposée à une distance (11) de la seconde barre profilée (8).

9. Assemblage en T selon l'une au moins des revendications 1 à 8, **caractérisé en ce que** la vis servant d'élément de fixation (5) est inclinée avec sa tête (16) vers la seconde barre profilée (8).

10. Assemblage en T selon l'une- au moins des revendications 1 à 9, **caractérisé en ce que** le raccord (1) présente pour l'élément de fixation (5) à la fois un trou perpendiculaire et un trou incliné par rapport aux mâchoires de serrage (6).

11. Assemblage en T selon l'une au moins des revendications 1 à 10, **caractérisé en ce que** le raccord (1) présente dans une mâchoire de serrage (6) un trou oblong (18) pour la mise en place de l'élément de fixation (5) et/ou **en ce que** les branches formant pinces (19) du raccord (1) sont aptes à être calées avec des extrémités bombées (20) dans les contre-dépouilles (21) des rainures latérales (7), dans différentes positions angulaires définitives du raccord (1) sur la seconde barre profilée (8).

12. Assemblage en T selon l'une au moins des revendications 1 à 11, **caractérisé en ce que** les mâchoires de serrage (6) présentent un emboîtement mutuel (23) qui empêche des déplacements transversaux et/ou parallèles relatifs.

13. Assemblage en T selon l'une au moins des revendications 1 à 12, **caractérisé en ce qu'**il y a sur les surfaces intérieures (22) des mâchoires de serrage (6) un emboîtement mutuel en dents de scie et/ou **en ce qu'**il est prévu des protubérances (23") et/ou des saillies (23^{IV}) qui s'étendent longitudinalement et qui pénètrent dans des rainures longitudinales (23') de l'autre mâchoire de serrage (6).

14. Assemblage en T selon l'une au moins des revendications 1 à 13, **caractérisé en ce qu'**une branche formant pince (19) d'une mâchoire de serrage (6) d'un raccord (1) occupe au maximum une moitié (40) de la section transversale (25) d'une rainure latérale (7) de la seconde barre profilée (8), dans l'autre moitié (41) de laquelle peut être montée une branche formant pince (19) d'un autre raccord (1).

15. Assemblage en T selon l'une au moins des revendications 1 à 14, **caractérisé en ce que** le raccord (1) et l'extrémité (12) de la première barre profilée (4) ne dépassent pas des plans médians (26) de deux rainures latérales (7) occupées par des mâchoires de serrage, qui traversent tous les deux l'axe longitudinal (9') de la seconde barre profilée (8).

16. Assemblage en T selon l'une au moins des revendications 1 à 15, **caractérisé en ce que** les branches formant pinces (19) sont adaptées par complémentarité de forme à une contre-dépouille (21) d'une rainure latérale (7) de la seconde barre profilée (8).

17. Assemblage en T selon l'une au moins des revendications 1 à 16, **caractérisé en ce que** les mâchoires de serrage (6), quand les branches formant pinces (19) sont bloquées sur la seconde barre profilée (8), présentent un écartement (74) qui autorise un calage linéaire et/ou plan des nervures intérieures (10).

18. Assemblage en T selon l'une au moins des revendications 1 à 17, **caractérisé en ce que** les deux barres profilées (4, 8) présentent aussi bien des nervures intérieures (10) que des nervures latérales (7).

19. Assemblage en T selon l'une au moins des revendications 1 à 18, **caractérisé en ce que** la première barre profilée (4) est disposée à une certaine distance de la seconde barre profilée (8), en laissant l'élément de fixation (5) découvert.

20. Assemblage en T selon l'une au moins des revendications 1 à 19, **caractérisé en ce que** l'intervalle (11) qui laisse l'élément de fixation (5) découvert est défini entre une extrémité mise à longueur (12) de la première barre profilée (4) et une surface latérale (13) polygonale ou courbe de la seconde barre profilée (8).

21. Assemblage en T selon l'une au moins des revendications 1 à 20, **caractérisé en ce qu'**un cache (29) disposé entre les première (4) et seconde (8) barres profilées couvre le raccord (1) et le côté frontal (12) de la première barre profilée (4).

22. Assemblage en T selon l'une au moins des revendications 1 à 21, **caractérisé en ce que** le raccord (1) est formé d'une seule pièce à partir d'une tôle façonnée qui le raidit, avec deux mâchoires de serrage (6) qui présentent deux branches formant pinces (19).

23. Assemblage en T selon l'une au moins des revendications 1 à 22, **caractérisé en ce que** les mâchoires de serrage (6) sont pleines.

24. Assemblage en T selon l'une au moins des revendications 1 à 23, **caractérisé en ce que** les mâchoires de serrage allongées (6) sont bombées en sens inverse, de l'extrémité (6') à l'extrémité (6") .

25. Assemblage en T selon l'une au moins des revendications 1 à 24, **caractérisé en ce que** les mâchoires de serrage (6) sont pourvues à leurs extrémités (6', 6") de rainures longitudinales (75) qui, quand lesdites mâchoires (6) sont serrées, constituent des sections circonférentielles d'un perçage et/ou d'un perçage fileté.

26. Assemblage en T selon l'une au moins des revendications 1 à 25, **caractérisé en ce que** les mâchoires de serrage (6) sont enserrées par paires par des étriers de ressort (76).

27. Assemblage en T selon l'une au moins des revendications 1 à 26, **caractérisé en ce que** les mâchoires de serrage (6) sont pourvues, des deux côtés, de surfaces inclinées (77) qui permettent un centrage au niveau des nervures intérieures (10).

28. Assemblage en T selon l'une au moins des revendications 1 à 27, **caractérisé en ce que** les mâchoires de serrage (6) du raccord (1) sont conçues, côté emboîtement, en forme de segment sphérique.

29. Assemblage en T selon l'une au moins des revendications 1 à 28, **caractérisé en ce que** les deux barres profilées (4, 8) sont des profilés creux.

30. Assemblage en T selon l'une au moins des revendications 1 à 29, **caractérisé en ce que** les mâchoires de serrage (6) sont bloquées sur la seconde barre profilée (8) en laissant une rainure latérale (7) découverte.

31. Assemblage en T selon l'une au moins des revendications 1 à 30, **caractérisé en ce que** les barres profilées (4, 8) de sections transversales différentes, au besoin, présentent des rainures latérales (7) de même écartement (78), et/ou **en ce que** les nervures intérieures (10) des deux barres profilées (4, 8) sont disposées en étant associées de la même manière les unes aux autres et/ou suivant l'écartement (78) des rainures latérales (7).

32. Assemblage en T selon l'une au moins des revendications 1 à 31, **caractérisé en ce que** les barres profilées (4') à section transversale allongée présentent au moins une paroi transversale de cloisonnement (79) qui est garnie de nervures intérieures (10") dont l'écartement (E') par rapport à des nervures intérieures (10) alignées des barres profilées (4') et/ou à d'autres parois transversales (79) est adapté à la largeur (B) des mâchoires de serrage (6).

33. Assemblage en T selon la revendication 32, **caractérisé en ce qu'**entre deux parois transversales (79) d'une barre profilée (4') à section transversale allongée, il y a de la place pour disposer un raccord (1) dont les mâchoires de serrage (6) sont aptes à être calées sur les nervures intérieures (10) de deux sections de paroi (80) de la barre profilée (4') qui relient lesdites parois transversales (79).
